# EUROPEAN PATENT APPLICATION

(11) **EP 4 538 308 A1**
(43) Date of publication of application: **16.04.2025**
(21) Application number: 23819599.4
(22) Date of filing: 16.05.2023
(51) Int. Cl.: C08G 59/20, C08G 59/62, C08J 5/24, C08K 7/02, C08L 63/00, C08L 101/00, F17C 1/06

(54) **EPOXY RESIN COMPOSITION**

(30) Priority: 08.06.2022 JP 2022093342
(71) Applicant: MITSUBISHI GAS CHEMICAL COMPANY, INC., Chiyoda-ku Tokyo 100-8324 (JP)
(72) Inventor: WAKAHARA Daiki, Tokyo 125-8601 (JP); OHNISHI Nobuyoshi, Tokyo 100-8324 (JP); IKEUCHI Kousuke, Hiratsuka-shi, Kanagawa 254-0016 (JP); OKADA Kana, Hiratsuka-shi, Kanagawa 254-0016 (JP); MATSUMOTO Nobuhiko, Hiratsuka-shi, Kanagawa 254-0016 (JP); INNAN Susumu, Tokyo 125-8601 (JP)
(74) Representative: Vossius & Partner Patentanwälte Rechtsanwälte mbB
(86) International application number: PCT/JP2023/018273
(87) International publication number: WO 2023/238615

(57) **Abstract**

An epoxy resin composition contains an epoxy resin (A) and an epoxy resin curing agent (B). The epoxy resin (A) includes an epoxy resin (A1) having a glycidyl group derived from resorcinol, and an epoxy resin (A2) such as an epoxy resin having a glycidyl group derived from bisphenol F. The epoxy resin curing agent (B) includes resorcinol (B1) and/or the like. The epoxy resin composition has from 7 to 60 mass% epoxy resin curing agent (B) content.

## Description

### Technical Field

The present invention relates to an epoxy resin composition and a cured product of the same, a prepreg, a fiber-reinforced composite material, and a high-pressure gas container containing the fiber-reinforced composite material.

### Background Art

In recent years, environmentally friendly natural gas vehicles (CNG vehicles) and fuel cell vehicles (FCV) are becoming more popular. Fuel cell vehicles use, as their power sources, fuel cells, and constructing hydrogen stations where hydrogen as their fuels is compressed at a high pressure for filling in vehicles is essential.

Although steel tanks have been used so far as high-pressure gas storage tanks for use in hydrogen stations for fuel cell vehicles or as automotive fuel tanks for CNG vehicles, fuel cell vehicles etc., development of a lighter high-pressure gas storage tank in which a resin material is used for a liner of the tank or its outer layer is in progress. Weight reduction of automotive fuel tanks can improve the fuel economy of the vehicles equipped therewith and also provides other benefits.

As a resin material constituting a high-pressure gas storage tank, the use of a resin having a gas barrier property and a fiber-reinforced composite material (FRP) in which reinforcing fibers are impregnated with the resin is known. For example, Patent Document 1 discloses a method for producing a pressure container including a liner and an outer layer of the liner, the outer layer being configured by a composite material containing reinforcing fibers and a matrix resin, the method including winding the composite material around an outer periphery of the liner to form the outer layer by adopting the filament winding process or the tape winding process.

When a matrix resin in a composite material is not a thermoplastic resin but a cured product of a thermosetting resin, the winding process can be similarly adopted. In this case, a continuous reinforcing fiber bundle impregnated with a thermosetting resin (tow prepreg) is wound around an outer periphery of a liner, and then heated and cured to be molded.

A prepreg using an epoxy resin composition as a matrix resin is also known. For example, Patent Document 2 discloses: an epoxy resin composition containing an epoxy resin, a compound having two functional groups each having one active hydrogen that is reactive with an epoxy group in the molecule, and a curing agent; a prepreg and a fiber-reinforced composite material formed by impregnating reinforcing fibers with the epoxy resin composition.

Furthermore, as a thermosetting resin composition having a gas barrier property, for example, Patent Document 3 discloses a composition containing a meta-substituted aromatic resin, and an additional aromatic epoxy resin, and having an oxygen permeability equal to or less than a predetermined value, as an oxygen barrier composition for electric parts.

### Citation List

### Patent Document

Patent Document 1: WO 2016/084475
Patent Document 2: JP 2002-284852 A
Patent Document 3: JP 2012-533643 A

### Summary of Invention

### Technical Problem

In the preparation of the tow prepreg in which a reinforcing fiber yarn is impregnated with a thermosetting resin composition, examples of the methods adopted include impregnating a reinforcing fiber yarn with a thermosetting resin composition by immersing the reinforcing fiber yarn in a resin tank storing the thermosetting resin composition. The same step may be included in the production of a pressure container adopting the filament winding process or the tape winding process.

However, the above-described method has problems that a thermosetting resin composition having a high viscosity cannot be sufficiently impregnated into the reinforcing fiber yarn, and further that defoaming is difficult. Also, the method has a problem that a thermosetting resin composition having a short pot life and a short shelf life cannot be applied because the thermosetting resin composition may be cured during storage, or during production steps (for example, while the thermosetting resin composition is stored in a resin tank). Furthermore, when the thermosetting resin composition is cured too quickly, heat is generated at the time of curing, which may cause problems such as scorching in the obtained molded body.

In addition, high-pressure gas container for hydrogen gas storage, such as those used in a hydrogen station for a fuel cell vehicle or an on-vehicle fuel tank for a CNG vehicle, and a fuel cell vehicle, is required to have a high barrier property against hydrogen gas. However, even the use of the thermosetting resin compositions disclosed in Patent Documents 1 to 3 does not sufficiently solve the problems described above.

Thus, an object of the present invention is to provide an epoxy resin composition which is suitable for filament winding molding, resin transfer molding, and towpreg preparation because of its long pot life and low viscosity, has a long shelf life, causes less scorching during molding, and can achieve a high hydrogen gas barrier property; a cured product of the epoxy resin composition; and a prepreg, a fiber-reinforced composite material, and a high-pressure gas container using the epoxy resin composition.

### Solution to Problem

The present inventors have found that the above-described problems can be solved by an epoxy resin composition containing two specific epoxy resins as main epoxy resins and a predetermined amount of resorcinol or a pre-reaction product of resorcinol, an epoxy resin, and a curing accelerator, as an epoxy resin curing agent.

That is, the present invention relates to the following.
[1] An epoxy resin composition including an epoxy resin (A) and an epoxy resin curing agent (B),
   the epoxy resin (A) containing an epoxy resin (A1) and an epoxy resin (A2),
   the epoxy resin (A1) being an epoxy resin having a glycidyl group derived from resorcinol,
   the epoxy resin (A2) being at least one selected from the group consisting of: an epoxy resin (a21) having a glycidyl group derived from bisphenol F; an epoxy resin (a22) having a glycidyl group derived from bisphenol A; an epoxy resin (a23) having a glycidyl group derived from novolak phenol; an epoxy resin (a24) having a glycidyl group derived from triphenylmethane type phenol; an epoxy resin (a25) having a glycidyl group derived from a polyol having a naphthalene skeleton; and an epoxy resin (a26) having an aminoglycidyl group, and
   the epoxy resin curing agent (B) containing at least one selected from the group consisting of: resorcinol (B1); and a pre-reaction product (B2) of resorcinol (B1), the epoxy resin (A), and a curing accelerator (C), the pre-reaction product (B2) being a reaction product obtained by reacting from 1 to 40 parts by mass of the epoxy resin (A) and from 0.01 to 5 parts by mass of the curing accelerator (C) with 100 parts by mass of the resorcinol (B1),
   wherein the epoxy resin composition has from 7 to 60 mass% epoxy resin curing agent (B) content when a total amount of the epoxy resin (A) and the epoxy resin curing agent (B) in the epoxy resin composition is 100 mass%.
[2] The epoxy resin composition according to [1], wherein the epoxy resin curing agent (B) further includes an epoxy resin curing agent (B3), the epoxy resin curing agent (B3) including at least one selected from the group consisting of: a phenolic curing agent (b31) other than resorcinol (B1); and a dihydrazide curing agent (b32).
[3] The epoxy resin composition according to [2], wherein the phenolic curing agent (b31) other than resorcinol (B1) is at least one selected from the group consisting of bisphenol F, bisphenol A, novolak phenol, and triphenylmethane type phenol.
[4] The epoxy resin composition according to any one of [1] to [3], wherein [(A1)/(A2)], a mass ratio of the epoxy resin (A1) to the epoxy resin (A2) contained in the epoxy resin (A), is from 1/99 to 90/10.
[5] The epoxy resin composition according to any one of [1] to [4], wherein [(A1)/(A2)], a mass ratio of the epoxy resin (A1) to the epoxy resin (A2) contained in the epoxy resin (A), is from 20/80 to 90/10.
[6] The epoxy resin composition according to any one of [2] to [5], wherein [((B1) + (B2))/(B3)], a mass ratio of a total amount of the resorcinol (B1) and the pre-reaction product (B2) to the epoxy resin curing agent (B3) contained in the epoxy resin curing agent (B), is from 8/92 to 100/0.
[7] The epoxy resin composition according to any one of [1] to [6], further including a curing accelerator (C),
   the curing accelerator (C) including at least one selected from the group consisting of imidazoles, tertiary amines, and phosphorus compounds.
[8] The epoxy resin composition according to any one of [1] to [7], further including a stress relaxation component (D).
[9] The epoxy resin composition according to any one of [1] to [8], wherein a cured product of the epoxy resin composition has a hydrogen gas permeation coefficient of 8.4 × 10⁻¹¹ [cc•cm/(cm²•s•cmHg)] or less.
[10] A cured product of the epoxy resin composition according to any one of [1] to [9].
[11] A prepreg including a reinforcing fiber impregnated with the epoxy resin composition according to any one of [1] to [9].
[12] The prepreg according to [11], wherein the reinforcing fiber is at least one selected from the group consisting of a carbon fiber, a glass fiber, and a basalt fiber.
[13] The prepreg according to [11] or [12], wherein the prepreg is a tow prepreg.
[14] The prepreg according to [11] or [12], wherein the prepreg is a UD tape.
[15] A fiber-reinforced composite material, which is a cured product of the prepreg according to any one of [10] to [14].
[16] A high-pressure gas container including the fiber-reinforced composite material according to [15].

### Advantageous Effects of Invention

The present invention can provide an epoxy resin composition which is suitable for filament winding molding, resin transfer molding, and towpreg preparation because of its long pot life and low viscosity, has a long shelf life, causes less scorching during molding, and can achieve a high hydrogen gas barrier property; a cured product of the epoxy resin composition; and a prepreg, a fiber-reinforced composite material, and a high-pressure gas container using the epoxy resin composition. The high-pressure gas container has a high hydrogen gas barrier property and is suitable as a container for storing high-pressure hydrogen gas.

### Description of Embodiments

### [Epoxy resin composition]

The epoxy resin composition of the present invention is an epoxy resin composition including an epoxy resin (A) and an epoxy resin curing agent (B),
the epoxy resin (A) containing an epoxy resin (A1) and an epoxy resin (A2),
the epoxy resin (A1) being an epoxy resin having a glycidyl group derived from resorcinol,
the epoxy resin (A2) is at least one selected from the group consisting of: an epoxy resin (a21) having a glycidyl group derived from bisphenol F; an epoxy resin (a22) having a glycidyl group derived from bisphenol A; an epoxy resin (a23) having a glycidyl group derived from novolak phenol; an epoxy resin (a24) having a glycidyl group derived from triphenylmethane type phenol; an epoxy resin (a25) having a glycidyl group derived from a polyol having a naphthalene skeleton; and an epoxy resin (a26) having an aminoglycidyl group, and
the epoxy resin curing agent (B) containing at least one selected from the group consisting of: resorcinol (B1); and a pre-reaction product (B2) of resorcinol (B1), the epoxy resin (A), and a curing accelerator (C), the pre-reaction product (B2) being a reaction product obtained by reacting from 1 to 40 parts by mass of the epoxy resin (A) and from 0.01 to 5 parts by mass of the curing accelerator (C) with 100 parts by mass of the resorcinol (B1), wherein the epoxy resin composition has from 7 to 60 mass% epoxy resin curing agent (B) content in the epoxy resin composition.

The epoxy resin composition of the present invention has such a constitution, and thus has a long pot life, low viscosity, and a long shelf life, causes less scorching during molding, and can achieve a high hydrogen gas barrier property.

The reason why the above-described effect can be obtained in the present invention is not clear, but is inferred as follows.

The present inventors have found that the epoxy resin (A1) having a glycidyloxy group derived from resorcinol (hereinafter also simply referred to as "epoxy resin (A1)" or "component (A1)") have rapid curability among epoxy resins, and exhibit a high hydrogen gas barrier property.

However, the epoxy resin (A1) has a low epoxy equivalent and is rapid-curable, and thus readily reacts with an epoxy resin curing agent rapidly to generate heat during curing by heating. Therefore, it is found that when the content of the epoxy resin (A1) in the epoxy resin is too large, a problem such as discoloration or scorching may occur during heat molding. In addition, there was also a problem that the pot life and shelf life of the obtained epoxy resin composition became short, and thus the composition was not suitable for preparing a tow prepreg, and for producing a high-pressure gas container adopting the filament winding process, etc.

Here, the epoxy resin (A2) such as the epoxy resin having a glycidyl group derived from bisphenol F (hereinafter also simply referred to as "epoxy resin (A2)" or "component (A2)") is relatively likely to exhibit a hydrogen gas barrier property among epoxy resins, and can also suppress heat generation during heat curing as compared to the epoxy resin (A1).

Furthermore, it is considered that, due to the use of the resorcinol (B1) or the pre-reaction product (B2) of the resorcinol (B1), the epoxy resin (A) and the curing accelerator (C) as the epoxy resin curing agent in the present invention, the epoxy resin composition can have a reduced viscosity, and can also have improved pot life and shelf life without impairing the hydrogen gas barrier property.

### <Epoxy resin (A)>

The epoxy resin (A) used in the epoxy resin composition of the present invention contains an epoxy resin (A1) and an epoxy resin (A2). The epoxy resin (A1) is an epoxy resin having a glycidyl group derived from resorcinol. The epoxy resin (A2) is at least one selected from the group consisting of an epoxy resin (a21) having a glycidyl group derived from bisphenol F, an epoxy resin (a22) having a glycidyl group derived from bisphenol A, an epoxy resin (a23) having a glycidyl group derived from novolak phenol, an epoxy resin (a24) having a glycidyl group derived from triphenylmethane type phenol, an epoxy resin (a25) having a glycidyl group derived from a polyol having a naphthalene skeleton, and an epoxy resin (a26) having an aminoglycidyl group. Accordingly, an epoxy resin composition capable of achieving a high hydrogen gas barrier property while suppressing scorching during molding can be obtained.

### (Epoxy resin (A1))

The epoxy resin (A1) has a glycidyl group derived from resorcinol. Since the epoxy resin (A) contains the epoxy resin (A1), an epoxy resin composition which can achieve a high hydrogen gas barrier property can be provided.

The epoxy resin (A1) is typically resorcinol diglycidyl ether, and may contain oligomers in addition to resorcinol diglycidyl ether.

As the epoxy resin (A1), a commercially available product such as "Denacol (trade name) EX-201" available from Nagase ChemteX Corporation can be used.

A content of the epoxy resin (A1) in the epoxy resin (A) is preferably from 1 to 90 mass%, more preferably from 10 to 90 mass%, still more preferably from 20 to 90 mass%, further still more preferably from 20 to 85 mass%, further still more preferably from 20 to 80 mass%, further still more preferably from 25 to 80 mass%, further still more preferably from 25 to 75 mass%, further still more preferably from 30 to 75 mass%, further still more preferably from 40 to 70 mass%, and further still more preferably from 40 to 65 mass%. When the content of the epoxy resin (A1) in the epoxy resin (A) is within the above-described ranges, the epoxy resin composition can readily exhibit a high hydrogen gas barrier property, and scorching during molding can be suppressed.

An epoxy equivalent of the epoxy resin (A1) of the epoxy resin (A) is preferably 200 g/equivalent or less, more preferably 150 g/equivalent or less, and still more preferably 120 g/equivalent or less. Also, the epoxy equivalent is preferably 90 g/equivalent or more, more preferably 100 g/equivalent or more, and still more preferably 110 g/equivalent or more.

### (Epoxy resin (A2))

The epoxy resin (A2) is at least one selected from the group consisting of an epoxy resin (a21) having a glycidyl group derived from bisphenol F, an epoxy resin (a22) having a glycidyl group derived from bisphenol A, an epoxy resin (a23) having a glycidyl group derived from novolak phenol, an epoxy resin (a24) having a glycidyl group derived from triphenylmethane type phenol, an epoxy resin (a25) having a glycidyl group derived from a polyol having a naphthalene skeleton, and an epoxy resin (a26) having an aminoglycidyl group. As the epoxy resin (A2), one or two or more types can be used. It is considered that, due to the use of the epoxy resin (A2), an epoxy resin composition capable of achieving a high hydrogen gas barrier property while suppressing scorching during molding can be obtained.

### [Epoxy resin (a21)]

The epoxy resin (a21) has a glycidyl group derived from bisphenol F. The epoxy resin (a21) is typically bisphenol F diglycidyl ether, and may contain an oligomer in addition to bisphenol F diglycidyl ether. As the epoxy resin (a21), one or two or more types can be used.

As the epoxy resin (a21), commercially available products such as "jER (trade name) 807" and "jER (trade name) 4005P" available from Mitsubishi Chemical Corporation can be used.

### [Epoxy resin (a22)]

The epoxy resin (a22) has a glycidyl group derived from bisphenol A. The epoxy resin (a22) is typically bisphenol A diglycidyl ether, and may contain an oligomer in addition to bisphenol A diglycidyl ether. As the epoxy resin (a22), one or two or more types can be used.

As the epoxy resin (a22), commercially available products such as "jER 828", "jER (trade name) 834" and "jER (trade name) 1001" available from Mitsubishi Chemical Corporation can be used.

### [Epoxy resin (a23)]

The epoxy resin (a23) has a glycidyl group derived from novolak phenol. The epoxy resin (a23) is typically a resin synthesized using a phenol novolak resin and epichlorohydrin.

As the epoxy resin (a23), one or two or more types can be used.

Among the epoxy resins (a23), an epoxy resin (a23) having a low molecular weight is preferred from the viewpoint of obtaining an epoxy resin composition having low viscosity. The epoxy resin (a23) has a molecular weight of preferably from 400 to 1500, more preferably from 400 to 1000, and still more preferably from 400 to 900. From the viewpoint of handleability, a low-viscosity epoxy resin (a23) is preferred. The epoxy resin (a23) has a melt viscosity (150°C) of preferably 9.0 Pa • s or less, more preferably 6.0 Pa • s or less, and still more preferably 3.0 Pa • s or less.

As the epoxy resin (a23), commercially available products such as EPICLON (trade name) series "N730A", "N740", "N770", "N775", and "N865" available from DIC Corporation can be used.

### [Epoxy resin (a24)]

The epoxy resin (a24) has a glycidyl group derived from triphenylmethane type phenol. As the epoxy resin (a24), one type, or two or more types can be used.

As the epoxy resin (a24), commercially available products such as EPICLON (trade name) series "HP7250" and "HP7241" available from DIC Corporation can be used.

### [Epoxy resin (a25)]

The epoxy resin (a25) has a glycidyloxy group derived from a polyol having a naphthalene skeleton. The polyol having a naphthalene skeleton may have one or more naphthalene skeletons, and is preferably a polyol having one or two naphthalene skeleton(s).

Furthermore, the number of the glycidyloxy groups in the epoxy resin is preferably from 2 to 4, more preferably from 2 to 3, from the viewpoint of providing an epoxy resin composition which has a long pot life and a long shelf life, and can achieve a high hydrogen gas barrier property.

As the epoxy resin (a25), an epoxy resin represented by either the following General Formula (a251) or (a252) can be preferably exemplified:

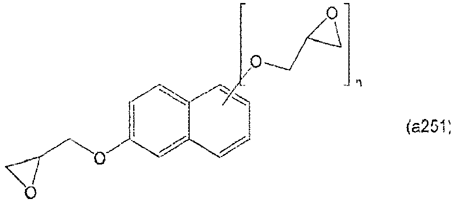

In the formula, n is from 1 to 3.

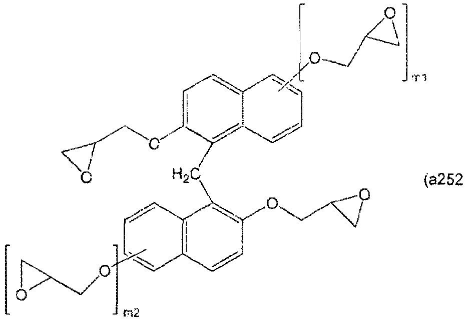

In the formula, m1 is from 0 to 2, m2 is from 0 to 2, and a sum of m1 and m2 is from 0 to 3.

In General Formula (a251), n is preferably 1 or 2, and more preferably 1.

In General Formula (a252), m1 is preferably 0 or 1, m2 is preferably 0 or 1, and a sum of m1 and m2 is preferably from 0 to 2, and more preferably 0.

More specifically, as the epoxy resin (a25), an epoxy resin represented by any of the following Formulae (a253) to (a256) can be exemplified.

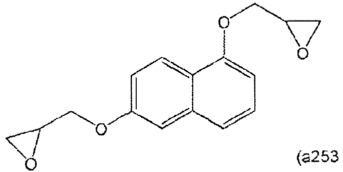

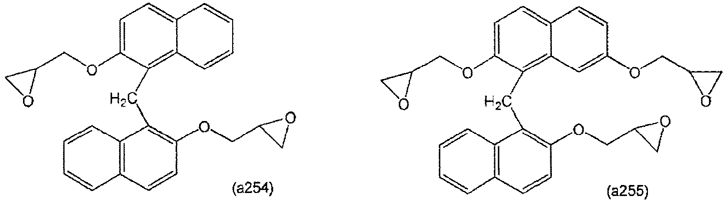

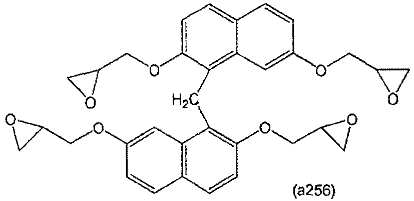

As the epoxy resin (a25), a commercially available product can also be used. Examples of the commercially available product include EPICLON (trade name) series "HP-4032SS" (an epoxy resin represented by Formula (a253)), "HP-4700" and "HP-4710" (epoxy resins represented by Formula (a256)), "EXA-4750" (an epoxy resin represented by Formula (a255)), "HP-4770" (an epoxy resin represented by Formula (a254)), "HP-5000", "HP-9900-75M" and "HP-9500", which are available from DIC Corporation.

As the epoxy resin (a25), one or two or more types can be used. Among them, the epoxy resin (a25) is preferably an epoxy resin represented by the above-described General Formula (a251), and more preferably an epoxy resin represented by the above-described Formula (a253), from the viewpoint of providing an epoxy resin composition having a long pot life and a long shelf life, and capable of achieving a high hydrogen gas barrier property.

### [Epoxy resin (a26)]

The epoxy resin (a26) has an aminoglycidyl group.

Examples of the epoxy resin (a26) include epoxy resins having a glycidylamino group derived from meta-xylylenediamine, epoxy resins having a glycidylamino group derived from para-xylylenediamine, epoxy resins having a glycidylamino group derived from diaminodiphenylmethane, and epoxy resins having a glycidylamino group derived from paraaminophenol. As the epoxy resin (a26), one or two or more types can be used.

As the epoxy resin (a26), commercially available products such as "TETRAD-X (trade name)" (N,N,N',N'-tetraglycidyl-m-xylenediamine) and "TETRAD (trade name)-C" (1,3-bis(N,N-diglycidylaminomethyl)cyclohexane) available from MITSUBISHI GAS CHEMICAL COMPANY, INC. can be used.

From the viewpoint of obtaining an epoxy resin composition which can achieve a high hydrogen gas barrier property and has low viscosity, the epoxy resin (A2) preferably contains at least one selected from the group consisting of an epoxy resin (a21) and an epoxy resin (a23), more preferably contains an epoxy resin (a23), and still more preferably contains an epoxy resin (a21) and an epoxy resin (a23).

A content of the epoxy resin (A2) in the epoxy resin (A) is preferably from 10 to 99 mass%, more preferably from 10 to 90 mass%, still more preferably from 10 to 80 mass%, further still more preferably from 15 to 80 mass%, further still more preferably 20 to 80 mass%, further still more preferably from 25 to 80 mass%, further still more preferably from 25 to 70 mass%, further still more preferably from 30 to 60 mass%, and further still more preferably from 40 to 60 mass%. When the content of the epoxy resin (A2) in the epoxy resin (A) is 10 mass% or more, scorching during molding can be suppressed. When the content is 99 mass% or less, an epoxy resin composition that does not impair the hydrogen gas barrier property derived from the epoxy resin (A1) can be obtained.

An epoxy equivalent of the epoxy resin (A2) of the epoxy resin (A) is preferably 1200 g/equivalent or less, more preferably 500 g/equivalent or less, still more preferably 250 g/equivalent or less, further still more preferably 220 g/equivalent or less, and further still more preferably 200 g/equivalent or less. In addition, the epoxy equivalent is preferably 120 g/equivalent or more, more preferably 130 g/equivalent or more, still more preferably 140 g/equivalent or more, further still more preferably 150 g/equivalent or more, and further still more preferably 170 g/equivalent or more.

A mass ratio [(A1)/(A2)] of the epoxy resin (A1) to the epoxy resin (A2), which are contained in the epoxy resin (A), is preferably from 1/99 to 90/10, more preferably from 10/90 to 90/10, still more preferably from 15/85 to 90/10, further still more preferably from 20/80 to 90/10, further still more preferably from 20/80 to 85/15, further still more preferably from 25/75 to 80/20, further still more preferably from 30/70 to 75/25, further still more preferably from 40/60 to 70/30, further still more preferably from 40/60 to 65/35, and further still more preferably from 40/60 to 60/40.

The epoxy resin (A) can also contain an epoxy resin other than the epoxy resin (A1) and the epoxy resin (A2). Examples of the epoxy resins other than the epoxy resin (A1) and the epoxy resin (A2) include an aliphatic epoxy resin having no aromatic ring. Examples of the aliphatic epoxy resin having no aromatic ring include chain aliphatic epoxy resins and aliphatic epoxy resins having an alicyclic structure.

Note that, from the viewpoint of exhibiting a high hydrogen gas barrier property, the total content of the epoxy resin (A1) and the epoxy resin (A2) in the epoxy resin (A) is preferably 70 mass% or more, more preferably 80 mass% or more, still more preferably 90 mass% or more, and further still more preferably 95 mass% or more, and 100 mass% or less.

An epoxy equivalent of the epoxy resin (A) is preferably 400 g/equivalent or less, more preferably 300 g/equivalent or less, still more preferably 250 g/equivalent or less, further still more preferably 220 g/equivalent or less, and further still more preferably 200 g/equivalent or less, from the viewpoint of curability. Moreover, the epoxy equivalent is preferably 100 g/equivalent or more, more preferably 110 g/equivalent or more, and still more preferably 120 g/equivalent or more, from the viewpoint of suppressing scorching during molding.

### <Epoxy resin curing agent (B)>

The epoxy resin curing agent (B) used in the epoxy resin composition of the present invention contains at least one selected from the group consisting of resorcinol (B1) and a pre-reaction product (B2) of resorcinol (B1), the epoxy resin (A) and a curing accelerator (C). The pre-reaction product (B2) is a reaction product obtained by reacting from 1 to 40 parts by mass of the epoxy resin (A) and from 0.01 to 5 parts by mass of the curing accelerator (C) with 100 parts by mass of the resorcinol (B1). A content of the epoxy resin curing agent (B) in the epoxy resin composition is from 7 to 60 mass%. It is considered that this configuration can achieve low viscosity, suppress heat generation during molding, and improve the pot life and shelf life.

### (Resorcinol (B1) and pre-reaction product (B2) of resorcinol (B1), the epoxy resin (A), and curing accelerator (C))

In the present invention, the epoxy resin curing agent (B) contains at least one selected from the group consisting of resorcinol (B1) and a pre-reaction product (B2) of resorcinol (B1), the epoxy resins (A) and a curing accelerator (C). Among them, the resorcinol (B1) is preferred.

The resorcinol (B1) is 1,3-dihydroxybenzene.

The pre-reaction product (B2) of the resorcinol (B1), the epoxy resin (A), and the curing accelerator (C) is a reaction product obtained by reacting from 1 to 40 parts by mass of the epoxy resin (A) and from 0.01 to 5 parts by mass of the curing accelerator (C) with 100 parts by mass of the resorcinol (B1).

Here, the curing accelerator (C) is the same as the curing accelerator (C) which may be optionally contained in the epoxy resin composition of the present invention which will be described later. The curing accelerator (C) used in the pre-reaction product (B2) is preferably at least one selected from the group consisting of imidazoles, tertiary amines, and phosphorus compounds.

Examples of the imidazoles include 1-cyanoethyl-2-ethyl-4-methylimidazole and 2-ethyl-4-methylimidazole.

Examples of the tertiary amines include tertiary amines capable of accelerating curing with a phenolic curing agent and salts thereof, such as 1,8-diazabicyclo[5.4.0]-undecene-7 (DBU), 1,5-diazabicyclo [4.3.0]-nonene-5 (DBN), and tris (dimethylaminomethylphenol).

Examples of the phosphorus compound include phosphine compounds such as triphenylphosphine and phosphonium salts such as tetraphenylphosphonium tetraphenylborate.

An amount of the epoxy resin (A) to be reacted with the resorcinol (B1) is preferably from 1 to 40 parts by mass, more preferably from 1 to 35 parts by mass, still more preferably from 1 to 30 parts by mass, and further still more preferably from 1 to 25 parts by mass, relative to 100 parts by mass of the resorcinol (B1).

An amount of the curing accelerator (C) to be reacted with the resorcinol (B1) is preferably from 0.01 to 5 parts by mass, more preferably from 0.01 to 4 parts by mass, still more preferably from 0.01 to 3 parts by mass, and further still more preferably from 0.01 to 2 parts by mass, relative to 100 parts by mass thereof.

Examples of a method for producing the pre-reaction product (B2), i.e., a method for reacting the resorcinol (B1), the epoxy resin (A) and the curing accelerator (C) include a method including mixing resorcinol (B1), the epoxy resin (A) and the curing accelerator (C) under a condition of preferably from 0 to 160°C, and more preferably from 0 to 140°C, and carrying out an addition reaction while stirring the components (A) and (B) and the curing accelerator (C) for preferably from 1 to 24 hours, and more preferably from 1 to 15 hours.

A total content of the resorcinol (B1) and the pre-reaction product (B2) of the resorcinol (B1), the epoxy resin (A) and the curing accelerator (C) in the epoxy resin curing agent (B) is preferably 50 mass% or more, more preferably 60 mass% or more, still more preferably 70 mass% or more, further still more preferably 80 mass% or more, further still more preferably 85 mass% or more, further still more preferably 90 mass% or more, and further still more preferably 95 mass% or more, and 100 mass% or less, from the viewpoint of achieving a low viscosity, from the viewpoint of suppressing heat generation during molding, and from the viewpoint of improving the pot life and shelf life.

The epoxy resin curing agent (B) may contain an epoxy resin curing agent other than the resorcinol (B1) or the pre-reaction product (B2) of the resorcinol (B1), the epoxy resin (A) and the curing accelerator (C) as long as the effects of the present invention are not impaired. Examples of the epoxy resin curing agent other than the resorcinol (B1) or the pre-reaction product (B2) of the resorcinol (B1), the epoxy resin (A) and the curing accelerator (C) include a compound having two or more groups having active hydrogen capable of reacting with an epoxy group in the epoxy resin (A). Examples of the type of the epoxy resin curing agent include phenolic curing agents other than the resorcinol (B1), hydrazide curing agents, and acid anhydride curing agents. Among them, a phenolic curing agent other than the resorcinol (B1) and a hydrazide curing agent are preferred. Next, these components will be described.

### (Epoxy resin curing agent (B3))

The epoxy resin curing agent (B) further contains an epoxy resin curing agent (B3) as an epoxy resin curing agent other than the resorcinol (B1) or the pre-reaction product (B2) of the resorcinol (B1), the epoxy resin (A) and the curing accelerator (C).

The epoxy resin curing agent (B3) is at least one selected from the group consisting of a phenolic curing agent (b31) other than the resorcinol (B1) and a dihydrazide curing agent (b32). It is considered that inclusion of these curing agents can suppress heat generation during molding while maintaining low viscosity, and can improve the pot life and shelf life. The epoxy resin curing agent (B3) is more preferably a phenolic curing agent (b31) other than the resorcinol (B1).

### (Phenolic curing agent (b31) other than resorcinol (B1))

The phenolic curing agent (b31) is preferably at least one selected from the group consisting of bisphenol F, bisphenol A, novolak phenol, and triphenylmethane type phenol, and the phenolic curing agent (b31) is more preferably novolak phenol from the viewpoint of curability and from the viewpoint of exhibiting a high hydrogen gas barrier property.

A hydroxyl group equivalent of the phenolic curing agent (b31) is usually 90 g/equivalent or more, and preferably 100 g/equivalent or more. From the viewpoint of curability and from the viewpoint of exhibiting a high hydrogen gas barrier property, the hydroxyl group equivalent is preferably 160 g/equivalent or less, more preferably 150 g/equivalent or less, still more preferably 130 g/equivalent or less, and further still more preferably 120 g/equivalent or less.

A softening point of the phenolic curing agent is preferably from 70 to 250°C, more preferably from 75 to 240°C, still more preferably from 75 to 200°C, further still more preferably from 75 to 120°C, and further still more preferably from 75 to 100°C, from the viewpoint of curability and from the viewpoint of exhibiting a high hydrogen gas barrier property. The softening point can be measured by, for example, a thermomechanical analyzer (TMA).

As the phenolic curing agent, a commercially available product can also be used. Examples of the commercially available product include PHENOLITE (trade name) series "TD-2131", "TD-2106", "TD-2093", "TD-2091", "TD-2090", "VH-4150", "VH-4170", "KH-6021", "KA-1160", "KA-1163", and "KA-1165", which are available from DIC Corporation.

### (Dihydrazide curing agent (b32))

Examples of the dihydrazide curing agent (b32) include carboxylic acid hydrazides such as adipic acid dihydrazide, and bissemicarbazide obtained by reacting diisocyanate with hydrazine. The dihydrazide curing agent is preferably carboxylic acid hydrazide, and more preferably adipic acid dihydrazide.

The epoxy resin curing agent (B3) may be a phenolic curing agent (b31) other than the resorcinol (B1) and a dihydrazide curing agent (b32) each alone or in combination. A content of the phenolic curing agent (b31) other than the resorcinol (B1) in the epoxy resin curing agent (B3) is preferably 70 mass% or more, more preferably 80 mass% or more, still more preferably 90 mass% or more, and further still more preferably 95 mass% or more, and 100 mass% or less.

A mass ratio [((B1) + (B2))/(B3)] of a total amount of the resorcinol (B1) and the pre-reaction product (B2) to the epoxy resin curing agent (B3), which are contained in the epoxy resin curing agent (B), is preferably from 8/92 to 100/0, more preferably from 50/50 to 100/0, still more preferably from 60/40 to 100/0, further still more preferably from 70/30 to 100/0, and further still more preferably from 80/20 to 100/0.

Especially, a mass ratio [(B1)/(B3)] of the resorcinol (B1) to the epoxy resin curing agent (B3), which are contained in the epoxy resin curing agent (B), is preferably from 8/92 to 100/0, more preferably from 50/50 to 100/0, still more preferably from 60/40 to 100/0, further still more preferably from 70/30 to 100/0, and further still more preferably from 80/20 to 100/0.

### <Curing accelerator (C)>

The epoxy resin composition of the present invention may further contain a curing accelerator (C) if necessary. It is preferable to further use the curing accelerator (C) from the viewpoint of accelerating curing.

The curing accelerator (C) is preferably at least one selected from the group consisting of imidazoles, tertiary amines, and phosphorus compounds.

Examples of the imidazoles include 1-cyanoethyl-2-ethyl-4-methylimidazole and 2-ethyl-4-methylimidazole.

Examples of the tertiary amines include tertiary amines capable of accelerating curing with a phenolic curing agent and salts thereof, such as 1,8-diazabicyclo[5.4.0]-undecene-7 (DBU), 1,5-diazabicyclo [4.3.0]-nonene-5 (DBN), and tris (dimethylaminomethylphenol).

Examples of the phosphorus compound include phosphine compounds such as triphenylphosphine and phosphonium salts such as tetraphenylphosphonium tetraphenylborate.

One or two or more types of the curing accelerator (C) can be used. Among those described above, from the viewpoint of improving curability, it is preferably at least one selected from the group consisting of imidazoles and tertiary amines, more preferably imidazoles, and still more preferably at least one selected from the group consisting of 1-cyanoethyl-2-ethyl-4-methylimidazole and 2-ethyl-4-methylimidazole.

### <Solvent>

The epoxy resin composition of the present invention can further contain a solvent from the viewpoint of reducing the viscosity of the composition when used for preparing a prepreg to enhance impregnation of the composition into reinforcing fibers.

Examples of the solvent include alcohol solvents such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol; ester solvents such as ethyl acetate and butyl acetate; ketone solvents such as acetone, methylethylketone, and methylisobutylketone; ether solvents such as diethyl ether and diisopropyl ether; hydrocarbon solvents such as toluene, and one type or two or more types of these can be used.

From the viewpoint of the solubility of the components (A) to (C) contained in the epoxy resin composition and the viewpoint of the ease of removal of the solvent, the solvent is preferably at least one selected from the group consisting of an alcohol-based solvent, an ester-based solvent, a ketone-based solvent, and a hydrocarbon-based solvent having 8 or less carbon atoms, and more preferably at least one selected from the group consisting of methanol, ethanol, 1-propanol, 2-propanol, 1-butanol, 2-butanol, ethyl acetate, methyl ethyl ketone, methyl isobutyl ketone, and toluene.

### <Content of each component and other components>

In the epoxy resin composition of the present invention, a content of the epoxy resin curing agent (B) is from 7 to 60 mass% when a total amount of the epoxy resin (A) and the epoxy resin curing agent (B) in the epoxy resin composition is 100 mass%. That is, the content of the epoxy resin curing agent (B) is from 7 to 60 mass% when the total amount of the epoxy resin (A) and the epoxy resin curing agent (B) is 100 mass%. When the content of the epoxy resin curing agent (B) is within this range, an epoxy resin composition having an excellent hydrogen gas barrier property and low viscosity can be obtained. In addition, the shelf life can be improved, and scorching during molding can also be reduced.

The content of the epoxy resin curing agent (B) is preferably from 10 to 60 mass%, more preferably from 15 to 60 mass%, still more preferably from 20 to 50 mass%, further still more preferably from 20 to 40 mass%, further still more preferably from 25 to 40 mass%, and further still more preferably from 30 to 40 mass% when the total amount of the epoxy resin (A) and the epoxy resin curing agent (B) is 100 mass%.

When the epoxy resin curing agent (B) used is at least one selected from the group consisting of the resorcinol (B1) and the pre-reaction product (B2) of the resorcinol (B1), the epoxy resin (A) and the curing accelerator (C), a total content of the resorcinol (B1) and the pre-reaction product (B2) of the resorcinol (B1), the epoxy resin (A) and the curing accelerator (C) is preferably from 7 to 60 mass% when the total amount of the epoxy resin (A) and the epoxy resin curing agent (B) in the epoxy resin composition of the present invention is 100 mass%. That is, the content of the resorcinol (B1) and the pre-reaction product (B2) of the resorcinol (B1), the epoxy resin (A) and the curing accelerator (C) is preferably from 7 to 60 mass% when the total amount of the epoxy resin (A) and the epoxy resin curing agent (B) is 100 mass%. When the total content of the resorcinol (B1) and the pre-reaction product (B2) is within this range, an epoxy resin composition having an excellent hydrogen gas barrier property and low viscosity. In addition, the shelf life can be improved, and scorching during molding can also be reduced.

The total content of the resorcinol (B1) and the pre-reaction product (B2) is preferably from 10 to 60 mass%, more preferably from 15 to 60 mass%, still more preferably from 20 to 50 mass%, further still more preferably from 20 to 40 mass%, further still more preferably from 25 to 40 mass%, and further still more preferably from 30 to 40 mass% when the total amount of the epoxy resin (A) and the epoxy resin curing agent (B) is 100 mass%.

Further, when the resorcinol (B1) is used alone as the epoxy resin curing agent (B), a content of the resorcinol (B1) is preferably from 7 to 60 mass% when the total amount of the epoxy resin (A) and the epoxy resin curing agent (B) in the epoxy resin composition of the present invention is 100 mass%. That is, the content of the resorcinol (B1) is preferably from 7 to 60 mass% when the total amount of the epoxy resin (A) and the epoxy resin curing agent (B) is 100 mass%. When the content of the resorcinol (B1) is within this range, an epoxy resin composition having an excellent hydrogen gas barrier property and low viscosity can be obtained. In addition, the shelf life can be improved, and scorching during molding can also be reduced.

When the resorcinol (B1) is used alone as the epoxy resin curing agent (B), the content of the resorcinol (B1) is preferably from 10 to 60 mass%, more preferably from 15 to 60 mass%, still more preferably from 20 to 50 mass%, further still more preferably from 20 to 40 mass%, and further still more preferably from 30 to 40 mass% when the total amount of the epoxy resin (A) and the epoxy resin curing agent (B) is 100 mass%.

A content ratio between the epoxy resin (A) and the epoxy resin curing agent (B) in the epoxy resin composition of the present invention is an amount such that a ratio of the number of active hydrogens in the epoxy resin curing agent to the number of epoxy groups in the epoxy resin (the number of active hydrogens in the epoxy resin curing agent/the number of epoxy groups in the epoxy resin) is preferably from 1/0.5 to 1/2, more preferably from 1/0.75 to 1/1.5, and still more preferably from 1/0.8 to 1/1.2. The ratio needs to be within the above-mentioned range at the final, and may be fixed during molding of the epoxy resin composition or may be varied during molding.

The content of the epoxy resin (A) in the epoxy resin composition of the present invention is not limited as long as the content ratio between the epoxy resin (A) and the epoxy resin curing agent (B) is preferably within the above-described range, but is preferably from 40 to 90 mass%, more preferably from 50 to 80 mass%, and still more preferably from 60 to 75 mass% in 100 mass% of the solid content in the epoxy resin composition. The "solid content in the epoxy resin composition" is an amount obtained by subtracting water and an organic solvent from the total amount of the epoxy resin composition.

In a case where the epoxy resin composition does not contain a solvent, the content of the epoxy resin (A) in the epoxy resin composition is preferably from 40 to 90 mass%, more preferably from 50 to 80 mass%, and still more preferably from 60 to 75 mass%.

The content of the curing accelerator (C) in the epoxy resin composition of the present invention is preferably from 0.01 to 10 parts by mass, more preferably from 0.01 to 5 parts by mass, and still more preferably from 0.05 to 1 parts by mass, relative to 100 parts by mass of the epoxy resin (A), from the viewpoint of improving curability.

The content of the curing accelerator (C) indicated here does not include the amount of the curing accelerator (C) contained in the pre-reaction product (B2).

When the epoxy resin composition contains a solvent, a content thereof is not particularly limited, but is preferably 5 mass% or more, more preferably 10 mass% or more, and still more preferably 15 mass% or more in the epoxy resin composition from the viewpoint of lowering the viscosity of the composition to enhance impregnation of the composition into reinforcing fibers when used for preparing a prepreg, and is preferably 95 mass% or less, more preferably 90 mass% or less, still more preferably 80 mass% or less, and further still more preferably 70 mass% or less from the viewpoint of ease of removal of the solvent.

The total content of the epoxy resin (A), the epoxy resin curing agent (B), and the curing accelerator (C) in the epoxy resin composition of the present invention is preferably 70 mass% or more, more preferably 80 mass% or more, still more preferably 90 mass% or more, and further still more preferably 95 mass% or more, and 100 mass% or less, in 100 mass% of the solid content in the epoxy resin composition, from the viewpoint of effectively exhibiting the effects of the present invention. When the epoxy resin composition does not contain a solvent, the total content of the epoxy resin (A), the epoxy resin curing agent (B), and the curing accelerator (C) in the epoxy resin composition is preferably 70 mass% or more, more preferably 80 mass% or more, still more preferably 90 mass% or more, further still more preferably 95 mass% or more, and 100 mass% or less.

The epoxy resin composition of the present invention may further contain other components such as a filler, a modifying component such as a plasticizer, a flow adjusting component such as a thixotropic agent, a reactive or non-reactive diluent, a pigment, a leveling agent, a tackifier, a flame retardant, and a stress relaxation component depending on the application. Among them, the epoxy resin composition of the present invention preferably further contains a stress relaxation component (D). Inclusion of the stress relaxation component (D) can reduce the elastic modulus and suppress cracking, which is preferred.

The stress relaxation component (D) is preferably at least one selected from the group consisting of a silicone-based resin, a butyl acrylate-based resin, a polyetheramine-based resin, an elastomer particle, a thermoplastic resin, a functional group-modified thermoplastic resin, a rubber resin, and a functional group-modified rubber resin, and more preferably an elastomer particle and a functional group-modified rubber resin.

The elastomer particle is preferably at least one selected from the group consisting of a silicone-based particle, a polydiene-based particle, a butyl acrylate-based particle, a polyetheramine-based particle, and other rubber particles, and more preferably a silicone-based particle and a polydiene-based particle.

The functional group modified rubber resin is preferably an epoxidized polydiene resin.

From the viewpoint of reducing the elastic modulus, a content of the stress relaxation component (D) in the epoxy resin composition of the present invention is preferably 1 mass% or more, more preferably 3 mass% or more, still more preferably 4 mass% or more, and further still more preferably 8 mass% or more in 100 mass% of the solid content in the epoxy resin composition. Also, the content is preferably 30 mass% or less, more preferably 20 mass% or less, still more preferably 15 mass% or less, and further still more preferably 12 mass% or less, from the viewpoint of reducing the elastic modulus.

From the viewpoint of using the epoxy resin composition according to the present invention for preparing a prepreg and a fiber-reinforced composite material which will be described later, a content of the filler in the epoxy resin composition is preferably small from the viewpoint of enhancing the impregnation thereof into reinforcing fibers. The content of the filler in the epoxy resin composition is preferably 30 mass% or less, more preferably 20 mass% or less, still more preferably 15 mass% or less, further still more preferably 10 mass% or less, further still more preferably 5 mass% or less, and further still more preferably 0 mass%. Examples of the filler include inorganic powders such as silica powder and alumina powder.

### <Hydrogen gas permeation coefficient>

The cured product of the epoxy resin composition of the present invention exhibits a high hydrogen gas barrier property. A hydrogen gas permeation coefficient at 23°C of the cured product of the epoxy resin composition of the present invention is preferably 8.4 × 10⁻¹¹[cc•cm/(cm²•s•cmHg)] or less, more preferably 7.0 × 10⁻¹¹ [cc•cm/(cm²•s•cmHg)] or less, still more preferably 6.0 × 10⁻¹¹ [cc•cm/(cm²•s•cmHg)] or less, further still more preferably 5.0 × 10⁻¹¹ [cc•cm/(cm²•s•cmHg)] or less, further still more preferably 3.5 × 10⁻¹¹ [cc•cm/(cm²•s•cmHg)] or less, further still more preferably 3.0 × 10⁻¹¹ [cc•cm/(cm²•s•cmHg)] or less, and further still more preferably 2.0 × 10⁻¹¹ [cc•cm/(cm²•s•cmHg)] or less.

The hydrogen gas permeation coefficient of the cured product of the epoxy resin composition is measured under a drying condition of 23°C (23°C, a humidity of 0%) in accordance with JIS K 7126-1. The hydrogen gas permeability coefficient can be measured by a method which will be described in Examples.

### <Pot life>

The epoxy resin composition of the present invention has a long pot life (working life). For example, the pot life of the epoxy resin composition at 23°C is preferably 3 hours or more, more preferably 6 hours or more, still more preferably 12 hours or more, and further still more preferably 24 hours or more. The pot life of the epoxy resin composition can be measured specifically by a method which will be described in Examples.

### <Shelf life>

The epoxy resin composition of the present invention has a long shelf life (storage life). For example, the shelf life of the epoxy resin composition at 0°C is preferably 7 days or more, more preferably 14 days or more, and still more preferably 30 days or more. The shelf life of the epoxy resin composition can be measured specifically by a method which will be described in Examples.

The method for preparing the epoxy resin composition of the present invention is not particularly limited, and the epoxy resin composition can be prepared by mixing the epoxy resin (A), the epoxy resin curing agent (B), and, if necessary, an additional component using known method and apparatus. The order of mixing of the components contained in the epoxy resin composition is also not particularly limited. The epoxy resin composition may be prepared by mixing the component (A1) and the component (A2) constituting the epoxy resin (A) and then mixing them with other components. Alternatively, the epoxy resin composition may be prepared by simultaneously mixing the component (A1), the component (A2) constituting the epoxy resin (A), and other components.

From the viewpoint of avoiding the progress of gelation before use, the components to be contained in the epoxy resin composition are contacted and mixed with each other preferably immediately before use. The temperature when mixing the components to be contained in the epoxy resin composition can be appropriately adjusted depending on the viscosity of the epoxy resin. However, from the viewpoint of suppressing an increase in viscosity, the temperature is preferably 120°C or lower, and more preferably 100°C or lower, and from the viewpoint of miscibility of the epoxy resin, the temperature is preferably 20°C or higher, and more preferably 25°C or higher. The mixing time is preferably in a range of from 0.1 to 15 minutes, more preferably from 0.2 to 10 minutes, and still more preferably from 0.3 to 5 minutes.

### [Cured product]

The cured product of the epoxy resin composition of the present invention (hereinafter, also simply referred to as "cured product of the present invention") is obtained by curing the above-described epoxy resin composition of the present invention by a known method. Conditions for curing the epoxy resin composition are appropriately selected according to the intended use and form, and are not particularly limited.

The form of the cured product of the present invention is also not particularly limited, and can be selected according to the intended use. For example, when the intended use of the epoxy resin composition is a coating material, the cured product of the composition is usually in the form of a film. From the viewpoint of effectively exhibiting the effects of the present invention, the cured product of the present invention is preferably a matrix resin of a fiber-reinforced composite material which will be described below.

### [Prepreg]

The prepreg of the present invention is produced by impregnating reinforcing fibers with the epoxy resin composition.

### <Reinforcing fiber>

Examples of the form of the reinforcing fibers used in the prepreg include short fibers, long fibers, and continuous fibers. Among them, from the viewpoint of using the obtained prepreg to produce a high-pressure gas container by the filament winding process or the tape winding process, long fibers or continuous fibers are preferred, and continuous fibers are more preferred.

Note that, in the present specification, the short fibers refer to fibers having a fiber length of 0.1 mm or more and less than 10 mm, and the long fibers refer to fibers having a fiber length of 10 mm or more and 100 mm or less. The continuous fiber refers to a fiber bundle having a fiber length of more than 100 mm.

Examples of the shape of the continuous fibers include a tow, a sheet, a tape, etc., and examples of the continuous fibers constituting the sheet or the tape include a unidirectional (UD) material, a woven fabric, and a nonwoven fabric.

From the viewpoint of producing a high-pressure gas container by the filament winding process or the tape winding process using a prepreg, the shape of the continuous fibers is preferably a tow or a tape, and more preferably a tow. The number of continuous fiber bundles (the number of filaments) included in the tow is preferably from 3 K to 50 K, and more preferably from 6 K to 40 K from the viewpoint of easiness to obtain a high strength and a high elastic modulus.

In the continuous fiber, an average fiber length of the continuous fiber bundle is not particularly limited, but is preferably from 1 to 10000 m, and more preferably from 100 to 10000 m from the viewpoint of molding processability.

An average fineness of the continuous fiber bundle is preferably from 50 to 2000 tex (g/1000 m), more preferably from 200 to 1500 tex, and still more preferably from 500 to 1500 tex from the viewpoint of molding processability and from the viewpoint of easiness to obtain a high strength and a high elastic modulus.

An average tensile modulus of the continuous fiber bundle is preferably from 50 to 1000 GPa.

Examples of a material for the reinforcing fibers include inorganic fibers such as carbon fibers, glass fibers, basalt fibers, metal fibers, boron fibers, and ceramic fibers; and organic fibers such as aramid fibers, polyoxymethylene fibers, aromatic polyamide fibers, polyparaphenylenebenzobisoxazole fibers, and ultra-high-molecular-weight polyethylene fibers. Among them, inorganic fibers are preferred from the viewpoint of obtaining high strength. The reinforcing fibers are preferably at least one selected from the group consisting of carbon fibers, glass fibers, and basalt fibers from the viewpoint of lightweight, a high strength, and a high elastic modulus, and more preferably carbon fibers from the viewpoint of strength and lightweight.

Examples of the carbon fibers include polyacrylonitrile-based carbon fibers and pitch-based carbon fibers. In addition, carbon fibers made from plant-based raw materials such as lignin and cellulose can also be used.

The reinforcing fibers may be treated with a treatment agent. Examples of the treatment agent include a surface treatment agent or a sizing agent.

The surface treatment agent is preferably a silane coupling agent. Examples of the silane coupling agent include silane coupling agents each having a vinyl group, silane coupling agents each having an amino group, silane coupling agents each having an epoxy group, silane coupling agents each having a (meth)acrylic group, and silane coupling agents each having a mercapto group.

Examples of the sizing agent include urethane-based sizing agents, epoxy-based sizing agents, acrylic-based sizing agents, polyester-based sizing agents, vinyl ester-based sizing agents, polyolefin-based sizing agents, polyether-based sizing agents, and carboxylic acid-based sizing agents, and one type thereof can be used, or two or more types thereof can be used in combination. Examples of combinations of two or more types of the sizing agents include urethane/epoxy-based sizing agents, urethane/acrylic-based sizing agents, and urethane/carboxylic acid-based sizing agents.

From the viewpoint of improving interfacial adhesiveness to the cured product of the epoxy resin composition and further improving the strength, impact resistance of the resultant prepregs and composite materials, the amount of the treatment agent is preferably from 0.001 to 5 mass%, more preferably from 0.1 to 3 mass%, and still more preferably from 0.5 to 2 mass%, relative to the amount of the reinforcing fibers.

A commercially available product can also be used as the reinforcing fibers. Examples of commercially available continuous carbon fibers (tows) include TORAYCA (trade name) YARN such as each series of "T300", "T300B", "T400HB", "T700SC", "T800SC", "T800HB", "T830HB", "T1000GB", "T100GC", "M35JB", "M40JB", "M46JB", "M50JB", "M55J", "M55JB", "M60JB", "M30SC", and "Z600", which are available from Toray Industries, Inc.; TENAX (trade name) such as "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45" series, "UMS55" series, and "HTS40MC" series, which are available from TEIJIN LIMITED; and carbon fiber tows such as PYROFIL (trade name) "HT", "IM", and "HM" series, GRAFIL (trade name) "HT" series, and "DIALEAD"(trade name) series, which are available from Mitsubishi Chemical Corporation.

Furthermore, examples of commercially available continuous carbon fibers other than tows include carbon fiber fabrics such as TORAYCA (trade name) CLOTH "CO6142", "CO6151B", "CO6343", "CO6343B", "CO6347B", "CO6644B", "CK6244C", "CK6273C", "CK6261C", "UT70" series, "UM46" series, "BT70" series, "T300" series, "T300B" series, "T400HB" series, "T700SC" series, "T800SC" series, "T800HB" series, "T1000GB" series, "M35JB" series, "M40JB" series, "M46JB" series, "M50JB" series, "M55J" series, "M55JB" series, "M60JB" series, "M30SC" series, "Z600GT" series, which are available from Toray Industries, Inc.; and carbon fiber fabrics such as PYROFIL (trade name) "TR3110M", "TR3523M", "TR3524M", "TR6110HM", "TR6120HM", "TRK101M", "TRK510M", "TR3160TMS", "TRK979PQRW", "TRK976PQRW", "TR6185HM" and "TRK180M", which are available from Mitsubishi Chemical Corporation.

### <Content>

From the viewpoint of producing the prepreg with a high strength and a high elastic modulus, a content of the reinforcing fibers in the prepreg of the present invention is in a range in which a volume fraction of the reinforcing fibers in the prepreg is preferably in a range of 0.10 or more, more preferably 0.20 or more, still more preferably 0.30 or more, and further still more preferably 0.40 or more. In addition, from the viewpoints of the hydrogen gas barrier property, impact resistance, and molding processability, the volume fraction of the reinforcing fibers is preferably in a range of 0.85 or less, more preferably 0.80 or less, and still more preferably 0.70 or less.

A volume fraction Vf₁ of the reinforcing fibers in the prepreg can be calculated from the following equation. Vf1 = {(mass (g) of reinforcing fibers)/(specific gravity of reinforcing fibers)} ÷ [{(mass (g) of reinforcing fibers)/(specific gravity of reinforcing fibers)} + {(mass (g) of solid content of infiltrated epoxy resin composition)/(specific gravity of solid content of epoxy resin composition)}]

From the viewpoint of obtaining the effect of the present invention, the total content of the solid content and the reinforcing fibers in the epoxy resin composition constituting the prepreg of the present invention is preferably 70 mass% or more, more preferably 80 mass% or more, still more preferably 90 mass% or more, and the upper limit is 100 mass%.

### <Shape of prepreg and method for producing prepreg>

The shape of the prepreg varies depending on the form of the reinforcing fiber to be used, but the prepreg is preferably a tow prepreg from the viewpoint of producing a high-pressure gas container by the filament winding process or a tape winding process.

In addition, when continuous fibers in the form of a uni-directional (UD) material, a woven fabric, a nonwoven fabric, etc. are used, a sheet-shaped prepreg can also be used.

Among the sheet-shaped prepregs, the prepreg of the present invention is preferably a UD tape. The UD tape has a tape shape, and thus is suitably used particularly in the tape winding process. It may be cut and used as a small piece.

A method for producing the prepreg is not particularly limited, and the prepreg can be produced according to a known method. For example, a prepreg can be obtained produced by impregnating reinforcing fibers with an epoxy resin composition containing an epoxy resin (A), an epoxy resin curing agent (B), a curing accelerator (C), and a solvent used if necessary, and then subjecting the impregnated reinforcing fibers to drying to remove the solvent.

A method for impregnating the reinforcing fibers with the epoxy resin composition is not particularly limited, and a known method can be appropriately used depending on the form of the reinforcing fibers, or the like. For example, in the case of producing a tow prepreg, a method including immersing a continuous fiber bundle unwound from a roll in a resin bath filled with the epoxy resin composition described above, impregnating the continuous fiber bundle with the composition, and then pulling up the continuous fiber bundle from the resin bath can be exemplified. Thereafter, removing the excess epoxy resin composition using a drawing roll or the like may be performed.

The impregnation with the epoxy resin composition may be performed under a pressurized condition, or a reduced pressure condition, if necessary.

Next, if necessary, the reinforcing fibers impregnated with the epoxy resin composition are subjected to the drying to remove the solvent. The drying conditions in the drying are not particularly limited, but are preferably conditions under which the solvent can be removed and curing of the epoxy resin composition does not excessively proceed. From this viewpoint, for example, a drying temperature can be selected in a range of from 30 to 120°C, and a drying time can be selected in a range of from 10 seconds to 5 minutes.

The prepreg obtained through the drying may be wound once, etc. to form a prepreg product, or may be continuously subjected to the production of a fiber-reinforced composite material after being subjected to the drying without being wound, etc. In particular, in the case of producing a tape-shaped or sheet-shaped prepreg product, the prepreg is preferably wound into a roll-shaped product.

### [Fiber-reinforced composite material]

The fiber-reinforced composite material (FRP, hereinafter also simply referred to as "composite material") of the present invention is a cured product of the prepreg, and contains a cured product of the epoxy resin composition and reinforcing fibers. The fiber-reinforced composite material of the present invention contains a cured product of the epoxy resin composition and thus has a high hydrogen barrier property. The prepreg, the epoxy resin composition, the reinforcing fibers, and preferred aspects thereof used in the production of the composite material are the same as those described above.

From the viewpoint of obtaining a high strength and a high elastic modulus, the content of the reinforcing fibers in the fiber-reinforced composite material is in a range such that the volume fraction of the reinforcing fibers in the fiber-reinforced composite material is preferably 0.10 or more, more preferably 0.20 or more, still more preferably 0.30 or more, and further still more preferably 0.40 or more. In addition, from the viewpoints of the hydrogen gas barrier property, impact resistance, and molding processability, the volume fraction of the reinforcing fibers is preferably in a range of 0.85 or less, more preferably 0.80 or less, and still more preferably 0.70 or less.

The volume fraction Vf of the reinforcing fibers in the fiber-reinforced composite material can be calculated from the following equation. Vf = {(mass (g) of reinforcing fibers)/(specific gravity of reinforcing fibers)}/[{(mass (g) of reinforcing fibers)/(specific gravity of reinforcing fibers)} + {(mass (g) of cured product of epoxy resin composition)/(specific gravity of cured product of epoxy resin composition)}]

### <Method for producing fiber-reinforced composite material>

The composite material can be produced by pre-molding the prepreg so as to have a desired shape, and then curing the prepreg. For example, when the composite material of the present invention is applied to a molded body having a hollow shape such as a pipe, a shaft, a gas cylinder, or a tank, a composite material can be produced by molding a tow prepreg by the filament winding process, the braiding process, the 3D printer process, or the like.

In the filament winding process, specifically, a tow prepreg is wound around an outer surface of a balloon, a mandrel, or a liner, and then cured by heating, whereby a composite material having a desired shape can be produced.

In the braiding process, for example, a balloon or a mandrel is used to form a prepreg by braiding a tow prepreg with a braider in one direction or in a braid structure, and then curing of the prepreg by heating is performed. In the braiding process, a tow prepreg may be braided and molded without using a balloon or a mandrel.

When a sheet-shaped prepreg such as a uni-directional (UD) material such as a UD tape, a woven fabric, or a nonwoven fabric is used, a composite material can be produced by one prepreg or stacking a plurality of prepregs and placing the prepreg(s) in a mold, and curing the prepreg(s) by heating under a vacuum condition, or a pressurized condition.

A method for curing the prepreg in the production of the composite material is also not particularly limited, and is conducted by a known method at a temperature and for a time sufficient to cure the epoxy resin composition contained in the prepreg. Conditions for curing the prepreg depend on, for example, the thicknesses of the prepreg and the composite material to be formed. For example, a curing temperature can be selected in a range of from 10 to 180°C and a curing time can be selected in a range of from 5 minutes to 200 hours. From the viewpoint of productivity, the curing temperature is preferably in a range of from 80 to 180°C and the curing time is preferably in a range of from 10 minutes to 5 hours.

The composite material of the present invention is preferably used for a molded body having a hollow shape such as a pipe, a shaft, a gas cylinder, a tank, or a cylinder (a circular cylinder whose both ends are closed by two discs) from the viewpoint of production using a tow prepreg. Since the composite material is excellent in a hydrogen gas barrier property, it is particularly preferable as a material for forming a high-pressure gas container.

### [High-pressure gas container]

The high-pressure gas container of the present invention contains the fiber-reinforced composite material. The high-pressure gas container of the present invention needs to be configured such that at least a part thereof is made of the fiber-reinforced composite material. For example, in the case of a high-pressure gas container having a liner and an outer layer provided so as to cover the outer surface of the liner, examples thereof include a high-pressure gas container in which at least one of the liner and the outer layer is made of the fiber-reinforced composite material. In the case of a linerless high-pressure gas container, examples thereof include the entire container is made of the fiber-reinforced composite material.

Specific aspects of the high-pressure gas container containing the fiber-reinforced composite material include, for example, (1) a configuration including: a metallic liner; and an outer layer made of the fiber-reinforced composite material of the present invention, (2) a configuration including: a resin liner; and an outer layer made of the fiber-reinforced composite material of the present invention, (3) a configuration including: a liner made of the fiber-reinforced composite material of the present invention; and an outer layer made of a material other than the fiber-reinforced composite material, and (4) a configuration of only a (linerless) container made of the fiber-reinforced composite material of the present invention.

As the metal used in the "metallic liner" in the aspect (1), examples thereof include light alloys such as aluminum alloys and magnesium alloys.

The resin used for the "resin liner" in the aspect (2) is not particularly limited as long as it is a resin excellent in a hydrogen gas barrier property and pressure resistance, and examples thereof include thermoplastic resins, cured products of thermosetting resins, and cured products of photocurable resins. Among them, a thermoplastic resin is preferred from the viewpoint of enabling easy molding of the liner.

Examples of the thermoplastic resin include polyamide resins, polyester resins, polyolefin resins, polyimide resins, polycarbonate resins, polyetherimide resins, polyamideimide resins, polyphenylene etherimide resin, polyphenylene sulfide resins, polysulfone resins, polyethersulfone resins, polyarylate resins, liquid crystal polymers, polyetheretherketone resins, polyetherketone resins, polyetherketoneketone resins, polyetheretherketoneketone resins, and polybenzimidazole resins, and one type thereof can be used, or two or more types thereof can be used in combination.

From the viewpoint of a hydrogen gas barrier property and pressure resistance, at least one selected from the group consisting of polyamide resins and polyolefin resins is preferred among the thermoplastic resins, and a polyamide resin is more preferable.

Besides, from the viewpoint of enhancing impact resistance, the resin liner may contain the above-described stress relaxation component.

As the "outer layer made of a material other than the fiber-reinforced composite material" in the aspect (3), preferable examples thereof include an outer layer composed of a fiber-reinforced composite material other than the fiber-reinforced composite material of the present invention from the viewpoint of improved reinforcement.

In the aspects (1) to (3), the outer layer can be formed so as to cover the outer surface of the main body portion of the liner without any gaps.

The outer layer may be provided directly on the outer surface of the liner. Alternatively, one or two or more additional layers may be provided on the outer surface of the liner, and the outer layer may be provided on the surface of the additional layer. For example, an adhesive layer may be provided between the liner and the outer layer in order to improve adhesion between the liner and the outer layer.

In a case where the high-pressure gas container is of the aspect (1) or (2), the thickness of the outer layer made of the fiber-reinforced composite material of the present invention can be appropriately selected according to the capacity, shape, and other properties of the high-pressure gas container. The thickness of the outer layer is preferably 100 µm or more, more preferably 200 µm or more, and still more preferably 400 µm or more from the viewpoint of imparting a high hydrogen gas barrier property and impact resistance, and is preferably 80 mm or less, and more preferably 60 mm or less from the viewpoint of reducing the size and weight of the high-pressure gas storage tank.

In a case where the high-pressure gas container is of the aspect (3), the thickness of the liner made of the fiber-reinforced composite material of the present invention can be appropriately selected according to the capacity, shape, and other properties of the high-pressure gas container. The thickness of the liner is preferably 100 µm or more, more preferably 200 µm or more, and still more preferably 400 µm or more from the viewpoint of a hydrogen gas barrier property and pressure resistance, and is preferably 60 mm or less, and more preferably 40 mm or less from the viewpoint of miniaturization and weight reduction of the high-pressure gas container.

In a case where the high-pressure gas container is of the aspect (4), the thickness of the container made of the fiber-reinforced composite material of the present invention can be appropriately selected according to the capacity, shape, and other properties of the high-pressure gas container. The thickness of the container is preferably 1 mm or more, more preferably 2 mm or more, and still more preferably 5 mm or more from the viewpoint of a hydrogen gas barrier property and pressure resistance, and is preferably 80 mm or less, and more preferably 60 mm or less from the viewpoint of miniaturization and weight reduction of the high-pressure gas container.

From the viewpoint of obtaining a high strength and a high elastic modulus, the content of the reinforcing fibers in the liner, the outer layer, or the high-pressure gas container made of the fiber-reinforced composite material of the present invention is in a range that makes the volume fraction of the reinforcing fibers preferably 0.10 or more, more preferably 0.20 or more, still more preferably 0.30 or more, and further still more preferably 0.40 or more. In addition, from the viewpoints of a hydrogen gas barrier property, impact resistance, and molding processability, the content of the reinforcing fibers is preferably in a range that makes the volume fraction of the reinforcing fibers 0.85 or less, more preferably 0.80 or less, still more preferably 0.75 or less, and further still more preferably 0.70 or less.

The volume fraction of the reinforcing fibers can be calculated by the same method as described above.

Among those described above, the high-pressure gas container is preferably of any of the aspects (2), (3), and (4), and more preferably of the aspect (3) or (4) from the viewpoint of lightweight and the viewpoint of high barrier properties against hydrogen required for the fiber-reinforced composite material.

Note that the high-pressure gas container may further include parts, such as a connector and a valve, which are made of a material other than the fiber-reinforced composite material. Furthermore, an optional layer such as a protective layer, a coating layer, and an antirust-containing layer may be formed on the surface of the high-pressure gas container.

The gas to be stored in the high-pressure gas container needs to be in gaseous state at 25°C and 1 atm, and examples thereof include oxygen, carbon dioxide, nitrogen, argon, LPG, a substitute for CFCs, and methane, besides hydrogen. Among them, hydrogen is preferred from the viewpoint of the effectiveness of the present invention.

### <Method for producing high-pressure gas container>

As a method for producing the high-pressure gas container of the present invention, the production method described in the method for producing a fiber-reinforced composite material described above can be appropriately used depending on the form of the reinforcing fibers or the prepreg to be used. When a tow prepreg is used to manufacture a high-pressure gas container, the high-pressure gas container can be produced by molding the tow prepreg by the filament winding process, the braiding process, the 3D printer method, or the like.

In a case where the high-pressure gas container is of the aspect (1) or (2), a tow prepreg is wound so as to cover an outer surface of a metallic or resin liner using the filament winding process, and then heated and cured to form an outer layer made of a fiber-reinforced composite material, whereby the high-pressure gas container can be produced.

In a case where the high-pressure gas container is of the aspect (3) or (4), a tow prepreg can be formed into a container shape by the filament winding process, the braiding process, the 3D printer process, or the like, and then heated and cured to manufacture a high-pressure gas container.

### Examples

Hereinafter, the present invention will be described in detail with reference to Examples and Comparative Examples, but the present invention is not limited to the following Examples. Note that the measurements and evaluations in the present Examples were performed by the following methods.

### <Hydrogen gas permeation coefficient [cc•cm/(cm²•s•cmHg)>

The epoxy resin composition prepared in each example was poured into a mold (120 mm × 120 mm × 1 mm) coated with a release agent ("FREKOTE (trade name) 770-NC" available from Henkel AG & Co. KGaA), and heated and cured under a condition of from 80 to 160°C for 2 hour to prepare a plate-shaped molded body having a thickness of 1 mm. A circular test piece having a thickness of 1 mm and a diameter of 20 mm was prepared from the plate-shaped molded body. For the test piece, the hydrogen gas permeation coefficient [cc•cm/(cm²•s•cmHg)] at 23°C was measured by a differential pressure method according to JIS K 7126-1 (23°C, a humidity of 0%) using a gas permeability measuring apparatus ("GTR-30X" available from GTR Tec Corporation).

### <Moldability>

The epoxy resin composition prepared in each example was poured into a mold (50 mm × 50 mm × 2 mm) coated with a release agent ("FREKOTE (trade name) 770-NC" available from Henkel AG & Co. KGaA), and heated and cured under a condition of from 80 to 160°C for 2 hour to prepare a plate-shaped molded body having a thickness of 2 mm. The appearance of the resultant molded body was visually observed and evaluated according to the following criteria.

### (Evaluation criteria)

A: There is no scorching or discoloration in the molded body, and the appearance is good.
B: Discoloration is observed in the molded body, but scorching is substantially suppressed.
C: Scorching is observed in the molded body, the color of the molded body turned into brown and the appearance of the molded body is impaired.

### <Pot life>

The initial viscosity at 23°C of the epoxy resin composition prepared in each example was measured, and 10 g of the epoxy resin composition was then placed in a plastic cup (diameter: 46 mm) and stored at 23°C. The time [h] at which the viscosity of the epoxy resin composition reached at least twice the initial viscosity was determined and shown in the table. In the table, those having a pot life exceeding 24 hours are indicated as "> 24". The longer the time, the better the pot life.

The viscosity of the epoxy resin composition was measured with an E-type viscometer "TV-100 type viscometer (cone plate type)" (available from Toki Sangyo Co., Ltd).

### <Shelf life>

Ten (10) g of the epoxy resin composition prepared in each example was put in a plastic cup (diameter: 46 mm) and stored at 0°C. The epoxy resin composition was brought back to room temperature (23°C) at a certain interval, the fluidity was visually observed, and the number of days [day] until the composition lost its fluidity during the storage at 0°C was shown in the table. In the table, those having a shelf life exceeding 30 days are indicated as "> 30". The longer the time, the better the shelf life.

### <Glass transition temperature (Tg) of cured product>

The cured product of the epoxy resin composition prepared in each example had a glass transition temperature (Tg) of from 80 to 180°C. The epoxy resin composition in each example was heated for a predetermined time (from 10 minutes to 5 hours) for each of the epoxy resin compositions in the examples, and completely cured until a peak derived from a curing reaction in differential scanning calorimetry (DSC) disappeared. Using a dynamic viscoelasticity measuring apparatus "DMA7100" (available from Hitachi High-Tech Science Corporation), the cured epoxy resin composition was measured for dynamic viscoelasticity under conditions: a temperature rising rate of 5°C/min and a temperature of from 30 to 200°C. A maximum value of tan δ obtained at that time was taken as the glass transition temperature (Tg). The higher the glass transition temperature (Tg) of the cured product, the better the heat resistance.

### <Elastic modulus (GPa) of cured product>

The elastic modulus (GPa) of the cured product of the epoxy resin composition prepared in each Example was measured as follows. The epoxy resin composition prepared in each example was heated at from 80 to 180°C for a predetermined time (from 10 minutes to 5 hours) for each of the epoxy resin compositions in the examples, and completely cured until a peak derived from a curing reaction in differential scanning calorimetry (DSC) disappeared. The cured epoxy resin composition was measured for elastic modulus at 30°C using the dynamic viscoelasticity measuring apparatus " DMA7100 " (available from Hitachi High-Tech Science Corporation). The smaller the value of the elastic modulus is, the more the elastic modulus is reduced and the less cracks or the like are likely to occur, which is preferred.

### <Viscosity>

The viscosity at 60°C of the epoxy resin composition prepared in each Example was measured with the E-type viscometer "TV-100 type viscometer (cone plate type)" (available from Toki Sangyo Co., Ltd.). The measurement was started after mixing the epoxy resin and the epoxy resin curing agent, and the value at 60°C after 120 seconds was read. In the table, those having a viscosity of 1 Pa•s or less are indicated as "A". Those having a viscosity exceeding 1 Pa•s are indicated as "B". Those having a lower viscosity have a lower viscosity and are better. In particular, those having a viscosity of 1 Pa•s or less are good.

### Example 1 (preparation and evaluation of epoxy resin composition)

As the epoxy resin (A), component (A1): resorcinol diglycidyl ether ("Denacol (trade name) EX-201" available from Nagase ChemteX Corporation, epoxy equivalent: 115 g/equivalent) and component (a21): bisphenol F diglycidyl ether ("jER (trade name) 807" available from Mitsubishi Chemical Corporation, epoxy equivalent: 168 g/equivalent) were used. As the epoxy resin curing agent (B), component (B1): resorcinol was used. Furthermore, as the curing accelerator (C), 2-ethyl-4-methylimidazole (available from Tokyo Chemical Industry Co., Ltd.) was used. These were blended and mixed in mass parts shown in Table 1 to obtain an epoxy resin composition. The ratio of the number of active hydrogens in the epoxy resin curing agent to the number of epoxy groups in the epoxy resin (the number of active hydrogens in the epoxy resin curing agent/the number of epoxy groups in the epoxy resin) was 1/1.

The resultant epoxy resin composition was evaluated by the above-described method. The results are presented in Table 1.

### Examples 2 to 8 and 17 to 26, and Comparative Examples 1 to 8

An epoxy resin composition was prepared and evaluated by the same method as in Example 1 except that the types and blending amounts of the epoxy resin (A), the epoxy resin curing agent ((B) or tetraethylenepentamine), and the curing accelerator (C) were changed as shown in Tables 1, 3 and 4. The results are presented in Tables 1, 3 and 4. In Comparative Examples 7 and 8, the pot life was very short, and a test piece required for the evaluation could not be obtained. Therefore, some evaluations were not performed.

### Examples 9 to 16

An epoxy resin composition was prepared and evaluated by the same method as in Example 1 except that the types and blending amounts of the epoxy resin (A), the epoxy resin curing agent (B), and the curing accelerator (C) were changed as shown in Table 2, and that the components shown in Table 2 were also blended and mixed as the stress relaxation component (D) when these components were blended. The results are presented in Table 2.

### [Table 1]

**Table 1**

| (Parts by mass) | | | | Functional group equivalent (g/eq) | Examples | | | | | | | |
|---|---|---|---|---|---|---|---|---|---|---|---|---|
| | | | | | 1 | 2 | 3 | 4 | 5 | 6 | 7 | 8 |
| Epoxy resin composition | Epoxy resin (A) | (A1) | Resorcinol diglycidyl ether | 115 | 29.0 | 14.9 | 29.0 | 39.5 | 27.0 | 26.0 | 24.8 | 16.0 |
| | | (A2) | (a21) Bisphenol F diglycidyl ether (jER807) | 168 | 43.0 | - | - | - | - | - | - | 34.0 |
| | | | (a21) Bisphenol F diglycidyl ether oligomer (jER4005P) | 10²⁶ | - | - | - | - | - | - | - | - |
| | | | (a22) Bisphenol A diglycidyl ether (jER828) | 18⁶ | - | - | - | - | - | - | - | - |
| | | | (a22) Bisphenol A diglycidyl ether oligomer (jER1001) | 483 | - | - | - | - | - | - | - | - |
| | | | (a23) Phenol novolak type epoxy (N730A) | 176 | - | 60.0 | 43.5 | - | 40.5 | 38.9 | 36.9 | 24.0 |
| | | | (a24) Triphenylmethane type epoxy (HP7241) | 171 | - | - | - | - | - | - | - | - |
| | | | (a25) Naphthalene epoxy resin (HP-4032SS) | 142 | - | - | - | 30.0 | - | - | - | - |
| | | | (a26) TETRAD-X | 99 | - | - | - | | - | - | - | - |
| | Epoxy resin curing agent | (B) | (b1) Resorcinol | 55 | 27.9 | 25.0 | 27.4 | 30.5 | 17.9 | 12.0 | 7.0 | 25.9 |
| | | | (b31) Novolak phenol | 104 | - | - | - | - | 14.4 | 23.0 | 31.1 | - |
| | | | (b32) Adipic acid hydrazide | 43.5 | - | - | - | - | - | - | - | - |
| | | | Tetraethylenepentamine | 31 | - | - | - | - | - | - | - | - |
| | Curing accelerator | (C) | 2-Ethyl-4-methylimidazole | | 0.1 | 0.1 | 0.1 | 0.1 | 0.1 | 0.1 | 0.1 | 0.1 |
| | Stress relaxation component | (D) | Kane Ace MX-136 | | - | - | - | - | - | - | - | - |
| | | | EPOLEAD PB4700 | | - | - | - | - | - | - | - | - |
| | | | ADEKA RESIN ERP-2000 | | - | - | - | - | - | - | - | - |
| | | | EPOLEAD PB3600 | | - | - | - | - | - | - | - | - |
| | (A1) content in (A) (%) | | | | 40 | 20 | 40 | 57 | 40 | 40 | 40 | 22 |
| | (A2) content in (A) (%) | | | | 60 | 80 | 60 | 43 | 60 | 60 | 60 | 78 |
| | (A) content in epoxy resin composition (%) | | | | 72 | 75 | 73 | 69 | 68 | 65 | 62 | 74 |
| | (B1) content in (B) (%) | | | | 100 | 100 | 100 | 100 | 55 | 34 | 18 | 100 |
| | (B2) content in (B) (%) | | | | 0 | 0 | 0 | 0 | 0 | 0 | 0 | 0 |
| | (B3) content in (B) (%) | | | | 0 | 0 | 0 | 0 | 45 | 66 | 82 | 0 |
| | Number of active hydrogens in curing agent/Number of epoxy groups in epoxy resin (functional group equivalent) | | | | 1/1 | 1/1 | 1/1 | 1/1 | 1/1 | 1/1 | 1/1 | 1/1 |
| Evaluation results | Hydrogen gas permeation coefficient (× 10⁻¹¹ cc•m/cm²•sec•cmHg) | | | | 2.5 | 2.6 | 1.9 | 3.0 | 2.9 | 3.3 | 4.0 | 2.8 |
| | Moldability (scorching, discoloration of resin) | | | | A | A | A | A | A | A | A | A |
| | Pot life (h) | | | | > 24 | > 24 | > 24 | > 24 | > 24 | > 24 | > 24 | > 24 |
| | Shelf life (day) | | | | > 30 | > 30 | > 30 | > 30 | > 30 | > 30 | > 30 | > 30 |
| | Tg (°C) | | | | 72.0 | 82.0 | *77.0* | 84.0 | 88.0 | 94.0 | 101.0 | 76.0 |
| | Elastic modulus at 30°C (GPa) | | | | - | - | - | - | - | - | - | 3.9 |
| | Viscosity (60°C viscosity) | | | | A | A | A | A | A | A | A | A |

### [Table 2]

**Table 2**

| (Parts by mass) | | | | Functional group equivalent (g/eq) | Examples | | | | | | | |
|---|---|---|---|---|---|---|---|---|---|---|---|---|
| | | | | | 9 | 10 | 11 | 12 | 13 | 14 | 15 | 16 |
| Epoxy resin composition | Epoxy resin (A) | (A1) | Resorcinol diglycidyl ether | 115 | 16.0 | 15.0 | 16.0 | 15.0 | 16.0 | 15.0 | 16.0 | 15.0 |
| | | (A2) | (a21) Bisphenol F diglycidyl ether (jER807) | 168 | 30.0 | 29.0 | 30.0 | 29.0 | 30.0 | 29.0 | 30.0 | 29.0 |
| | | | (a21) Bisphenol F diglycidyl ether oligomer (jER4005P) | 1026 | - | - | - | - | - | - | - | - |
| | | | (a22) Bisphenol A diglycidyl ether (iER828) | 186 | - | - | - | - | - | - | - | - |
| | | | (a22) Bisphenol A diglycidyl ether oligomer (jER1001) | 483 | - | - | - | - | - | - | - | - |
| | | | (a23) Phenol novolak type epoxy (N730A) | 176 | 24.0 | 22.0 | 24.0 | 22.0 | 24.0 | 22.0 | 24.0 | 22.0 |
| | | | (a24) Triphenylmethane type epoxy (HP7241) | 171 | - | - | - | - | - | - | - | - |
| | | | (a25) Naphthalene epoxy resin (HP-4032SS) | 142 | - | - | - | - | - | - | - | - |
| | | | (a26) TETRAD-X | 99 | - | - | - | - | - | - | - | - |
| | Epoxy resin curing agent | (B) | (b1) Resorcinol | 55 | 24.9 | 23.9 | 24.9 | 23.9 | 24.9 | 23.9 | 24.9 | 23.9 |
| | | | (b31) Novolak phenol | 104 | - | - | - | - | - | - | - | - |
| | | | (b32) Adipic acid hydrazide | 43.5 | - | - | - | - | - | - | - | - |
| | | | Tetraethylenepentamine | 31 | - | - | - | - | - | - | - | - |
| | Curing accelerator | (C) | 2-Ethyl-4-methylimidazole | | 0.1 | 0.1 | 0.1 | 0.1 | 0.1 | 0.1 | 0.1 | 0.1 |
| | Stress relaxation component | (D) | Kane Ace MX-136 | | 5.0 | 10.0 | - | - | - | - | - | - |
| | | | EPOLEAD PB4700 | | - | - | 5.0 | 10.0 | - | - | - | - |
| | | | ADEKA RESIN ERP-2000 | | - | - | - | - | 5.0 | 10.0 | - | - |
| | | | EPOLEAD PB3600 | | - | - | - | - | - | - | 5.0 | 10.0 |
| | (A1) content in (A) (%) | | | | 23 | 23 | 23 | 23 | 23 | 23 | 23 | 23 |
| | (A2) content in (A) (%) | | | | 77 | 77 | 77 | 77 | 77 | 77 | 77 | 77 |
| | (A) content in epoxy resin composition (%) | | | | 70 | 66 | 70 | 66 | 70 | 66 | 70 | 66 |
| | (B1) content in (B) (%) | | | | 100 | 100 | 100 | 100 | 100 | 100 | 100 | 100 |
| | (B2) content in (B) (%) | | | | 0 | 0 | 0 | 0 | 0 | 0 | 0 | 0 |
| | (B3) content in (B) (%) | | | | 0 | 0 | 0 | 0 | 0 | 0 | 0 | 0 |
| | Number of active hydrogens in curing agent/Number of epoxy groups in epoxy resin (functional group equivalent) | | | | 1/1 | 1/1 | 1/1 | 1/1 | 1/1 | 1/1 | 1/1 | 1/1 |
| Evaluation results | Hydrogen gas permeation coefficient (× 10⁻¹¹ cc•cm/cm²•sec•cmHg) | | | | 3.0 | 3.3 | 3.2 | 3.6 | 2.8 | 3.3 | 3.1 | 3.9 |
| | Moldability (scorching, discoloration of resin) | | | | A | A | A | A | A | A | A | A |
| | Pot life (h) | | | | > 24 | > 24 | > 24 | > 24 | > 24 | > 24 | > 24 | > 24 |
| | Shelf life (day) | | | | > 30 | > 30 | > 30 | > 30 | > 30 | > 30 | > 30 | > 30 |
| | Tg (°C) | | | | 74.0 | 75.0 | 73.0 | 72.0 | 75.0 | 72.0 | 72.0 | 71.0 |
| | Elastic modulus at 30°C (GPa) | | | | 3.5 | 3.2 | 3.7 | 3.5 | 3.7 | 3.6 | 3.6 | 3.5 |
| | Viscosity (60°C viscosity) | | | | A | A | A | A | A | A | A | A |

### [Table 3]

**Table 3**

| (Parts by mass) | | | | Functional group equivalent (g/eq) | Examples | | | | | | | | | |
|---|---|---|---|---|---|---|---|---|---|---|---|---|---|---|
| | | | | | 17 | 18 | 19 | 20 | 21 | 22 | 23 | 24 | 25 | 26 |
| Epoxy resin composition | Epoxy resin (A) | (A1) | Resorcinol diglycidyl ether | 115 | 29.0 | 15.8 | 14.7 | 15.9 | 14.9 | 16.2 | 16.2 | 1.0 | 1.0 | 1.0 |
| | | (A2) | (a21) Bisphenol F diglycidyl ether (jER807) | 168 | - | 30.0 | 30.0 | 30.0 | 30.0 | 28.3 | 23.3 | 45 | 39.4 | 31.9 |
| | | | (a21) Bisphenol F diglycidyl ether oligomer (jER4005P) | 1026 | - | - | - | 5.0 | 10.0 | - | - | 5.0 | 5.0 | 5.0 |
| | | | (a22) Bisphenol A diglycidyl ether (jER828) | 186 | - | - | - | - | - | - | - | - | - | - |
| | | | (a22) Bisphenol A diglycidyl ether oligomer (jER1001) | 483 | - | 5.0 | 10.0 | - | - | - | - | - | - | - |
| | | | (a23) Phenol novolak type epoxy (N730A) | 176 | 44.0 | 23.8 | 20.6 | 23.9 | 21.1 | 24.3 | 24.3 | 25.7 | 31.4 | 38.9 |
| | | | (a24) Triphenylmethane type epoxy (HP7241) | 171 | - | - | - | - | - | 5.0 | 10.0 | - | - | - |
| | | | (a25) Naphthalene epoxy resin (HP-4032SS) | 142 | - | - | - | - | - | - | - | - | - | - |
| | | | (a26) TETRAD-X | 99 | - | - | - | - | - | - | - | - | - | - |
| | Epoxy resin curing agent | (B) | (b1) Resorcinol | 55 | 23.0 | 25.4 | 24.4 | 25.2 | 24.0 | 26.2 | 26.2 | 23.4 | 23.4 | 23.3 |
| | | | (b31) Novolak phenol | 104 | - | - | - | - | - | - | - | - | - | - |
| | | | (b32) Adipic acid hydrazide | 43.5 | 4.0 | - | - | - | - | - | - | - | - | - |
| | | | Tetraethylenepentamine | 31 | - | - | - | - | - | - | - | - | - | - |
| | Curing accelerator | (C) | 2-Ethyl-4-methylimidazole | | - | 0.1 | 0.1 | 0.1 | 0.1 | 0.1 | 0.1 | 0.1 | 0.1 | 0.1 |
| | Stress relaxation component | (D) | Kane Ace MX-136 | | - | - | - | - | - | - | - | - | - | - |
| | | | EPOLEAD PB4700 | | - | - | - | - | - | - | - | - | - | - |
| | | | ADEKA RESIN ERP-2000 | | - | - | - | - | - | - | - | - | - | - |
| | | | EPOLEAD PB3600 | | - | - | - | - | - | - | - | - | - | - |
| | (A1) content in (A) (%) | | | | 40 | 21 | 20 | 21 | 20 | 22 | 22 | 1 | 1 | 1 |
| | (A2) content in (A) (%) | | | | 60 | 79 | 80 | 79 | 80 | 78 | 78 | 99 | 99 | 99 |
| | (A) content in epoxy resin composition (%) | | | | 73 | 75 | 75 | 75 | 76 | 74 | 74 | 77 | 77 | 77 |
| | (B1) content in (B) (%) | | | | 85 | 100 | 100 | 100 | 100 | 100 | 100 | 100 | 100 | 100 |
| | (B2) content in (B) (%) | | | | 0 | 0 | 0 | 0 | 0 | 0 | 0 | 0 | 0 | 0 |
| | (B3) content in (B) (%) | | | | 15 | 0 | 0 | 0 | 0 | 0 | 0 | 0 | 0 | 0 |
| | Number of active hydrogens in curing agent/Number of epoxy groups in epoxy resin (functional group equivalent) | | | | 1/1 | 1/1 | 1/1 | 1/1 | 1/1 | 1/1 | 1/1 | 1/1 | 1/1 | 1/1 |
| Evaluation results | Hydrogen gas permeation coefficient (× 10⁻¹¹ cc•cm/cm²•sec•cmHg) | | | | 2.9 | 3.0 | 3.3 | 2.9 | 3.0 | 2.6 | 2.5 | 3.8 | 3.8 | 3.9 |
| | Moldability (scorching, discoloration of resin) | | | | A | A | A | A | A | A | A | A | A | A |
| | Pot life (h) | | | | > 24 | > 24 | > 24 | > 24 | > 24 | > 24 | > 24 | > 24 | > 24 | > 24 |
| | Shelf life (day) | | | | > 30 | > 30 | > 30 | > 30 | > 30 | > 30 | > 30 | > 30 | > 30 | > 30 |
| | Tg(°C) | | | | 77.0 | 77.0 | 75.0 | 75.0 | 76.0 | 79.0 | 83.0 | 79.5 | 77.5 | 80.0 |
| | Elastic modulus at 30°C (GPa) | | | | - | 3.8 | 3.6 | 3.8 | 3.8 | 3.9 | 3.9 | 3.7 | 3.9 | 3.9 |
| | Viscosity (60°C viscosity) | | | | A | A | A | A | A | A | A | A | A | A |

### [Table 4]

**Table 4**

| (Parts by mass) | | | | Functional group equivalent (g/eq) | Comparative Examples | | | | | | | |
|---|---|---|---|---|---|---|---|---|---|---|---|---|
| | | | | | 1 | 2 | 3 | 4 | 5 | 6 | 7 | 8 |
| Epoxy resin composition | | (A1) | Resorcinol diglycidyl ether | 115 | - | - | 100 | 100 | 90 | 25 | 8.05 | 6.92 |
| | | (A2) | (a21) Bisphenol F diglycidyl ether (jER807) | 168 | 100 | 100 | - | - | 10 | 25 | - | 1.22 |
| | | | (a21) Bisphenol F diglycidyl ether oligomer (jER4005P) | 1026 | - | - | - | - | - | - | - | - |
| | | | (a22) Bisphenol A diglycidyl ether (jER828) | 186 | - | - | - | - | - | - | - | - |
| | Epoxy resin (A) | | (a22) Bisphenol A diglycidyl ether oligomer (jER1001) | 483 | - | - | - | - | - | - | - | - |
| | | | (a23) Phenol novolak type epoxy (N730A) | 176 | - | - | - | - | - | - | - | - |
| | | | (a24) Triphenylmethane type epoxy (HP7241) | 171 | - | - | - | - | - | - | - | - |
| | | | (a25) Naphthalene epoxy resin (HP-4032SS) | 142 | - | - | - | - | - | - | - | - |
| | | | (a26) TETRAD-X | 99 | - | - | - | - | - | 50 | - | - |
| | Epoxy resin curing agent | (B) | (b1) Resorcinol | 55 | | 33 | 48 | - | - | - | - | - |
| | | | (b31) Novolak phenol | 104 | 62 | - | - | 90 | 88 | 66 | - | - |
| | | | (b32) Adipic acid hydrazide | 43.5 | - | - | - | - | - | - | - | - |
| | | | Tetraethylenepentamine | 31 | - | - | - | - | - | - | 1.95 | 1.86 |
| | Curing accelerator | (C) | 2-Ethyl-4-methylimidazole | | 0.1 | 0.1 | 0.1 | 0.1 | 1.0 | 1.0 | - | - |
| | Stress relaxation component | (D) | Kane Ace MX-136 | | - | - | - | - | - | - | - | - |
| | | | EPOLEAD PB4700 | | - | - | - | - | - | - | - | - |
| | | | ADEKA RESIN ERP-2000 | | - | - | - | - | - | - | - | - |
| | | | EPOLEAD PB3600 | | - | - | - | - | - | - | - | - |
| | (A1) content in (A) (%) | | | | 0 | 0 | 100 | 100 | 90 | 25 | 100 | 85 |
| | (A2) content in (A) (%) | | | | 100 | 100 | 0 | 0 | 10 | 75 | 0 | 15 |
| | (A) content in epoxy resin composition (%) | | | | 62 | 75 | 68 | 53 | 53 | 60 | 81 | 81 |
| | (B1) content in (B) (%) | | | | 0 | 100 | 100 | 0 | 0 | 0 | - | - |
| | (B2) content in (B) (%) | | | | 0 | 0 | 0 | 0 | 0 | 0 | - | - |
| | (B3) content in (B) (%) | | | | 100 | 0 | 0 | 100 | 100 | 100 | - | - |
| | Number of active hydrogens in curing agent/Number of epoxy groups in epoxy resin (functional group equivalent) | | | | 1/1 | 1/1 | 1/1 | 1/1 | 1/1 | 1/1 | 1/1 | 1/1 |
| Evaluation results | Hydrogen gas permeation coefficient (× 10⁻¹¹ cc•cm/cm²•sec•cmHg) | | | | 8.5 | 7.1 | 1.2 | 2.5 | 3.1 | 10.0 | Test piece could not be prepared | Test piece could not be prepared |
| | Moldability (scorching, discoloration of resin) | | | | A | A | B | A | C | A | | |
| | Pot life (h) | | | | > 24 | > 24 | > 24 | > 24 | > 24 | > 24 | 0.5 | 0.5 |
| | Shelf life (day) | | | | >30 | >30 | >30 | >30 | >30 | >30 | 15 | 15 |
| | Tg(°C) | | | | 116.0 | 75.0 | 66.0 | 108.0 | 110.0 | 140.0 | - | - |
| | Elastic modulus at 30°C(GPa) | | | | - | - | - | - | - | - | - | - |
| | Viscosity (60°C viscosity) | | | | B | A | A | B | A | A | - | - |

The components shown in Tables 1 to 4 are as follows.

### <Epoxy resin (A)>

(A1) Resorcinol diglycidyl ether ("Denacol (trade name) EX-201" available from Nagase ChemteX Corporation, epoxy equivalent: 115 g/equivalent)
(a21) Bisphenol F diglycidyl ether (jER807) ("jER (trade name) 807" available from Mitsubishi Chemical Corporation, epoxy equivalent: 168 g/equivalent)
(a21) Bisphenol F diglycidyl ether (jER4005P) ("jER (trade name) 4005P " available from Mitsubishi Chemical Corporation, epoxy equivalent: 1026 g/equivalent, oligomer type)
(a22) Bisphenol A diglycidyl ether (jER828) ("jER (trade name) 828" available from Mitsubishi Chemical Corporation, epoxy equivalent: 186 g/equivalent)
(a22) Bisphenol A diglycidyl ether (jER1001) ("jER (trade name) 1001" available from Mitsubishi Chemical Corporation, epoxy equivalent: 483 g/equivalent, oligomer type)
(a23) Phenol novolak type epoxy ("N730A" available from DIC Corporation, epoxy equivalent: 176 g/equivalent)
(a24) Triphenylmethane type epoxy ("HP7241" available from DIC Corporation, epoxy equivalent: 171 g/equivalent)
(a25) Naphthalene epoxy resin ("HP-4032 SS" available from DIC Corporation, epoxy resin represented by Formula (a253), epoxy equivalent: 143 g/equivalent)

### <Epoxy resin curing agent>

(b1) Resorcinol
(b31) Novolak Phenol (TD-2131) ("TD-2131" available from DIC Corporation, hydroxyl value equivalent: 104 g/equivalent, softening point: from 78 to 82°C) (phenolic curing agent (b31))
(b32) Adipic acid dihydrazide (dihydrazide curing agent (b32)) Tetraethylenepentamine (amine curing agent)

### <Curing accelerator (C)>

2-Ethyl-4-methylimidazole (available from Tokyo Chemical Industry Co., Ltd.)

### <Stress relaxation component (D)>

Kane Ace MX-136: Core-shell rubber particle-dispersed epoxy resin master batch ("Kane Ace (trade name) MX-136" available from KANEKA CORPORATION, epoxy type Bis-F, particle-polybutadiene/silicone, particle-blending amount: 25%)
EPOLEAD PB4700: Epoxidized polybutadiene ("EPOLEAD (trade name) PB4700" available from DAICEL CORPORATION, molecular weight of from 2000 to 3500)
ADEKA RESIN ERP-2000: Rubber-modified epoxy resin ("ADEKA RESIN (trade name) ERP-2000" available from ADEKA CORPORATION, molecular weight of from 400 to 500)
EPOLEAD PB3600: Epoxidized polybutadiene ("EPOLEAD (trade name) PB3600" available from DAICEL CORPORATION, molecular weight of from 5900)

### <Production of pipe-shaped molded body (fiber-reinforced composite material containing carbon fiber as reinforcing fiber) (filament winding molding)>

Filament winding molding was performed using the epoxy resin compositions of Examples 3, 8, and 12 and carbon fibers (T700SC12K).

The epoxy resin composition was continuously coated for 12 hours to impregnate the carbon fibers with the resin. Thereafter, the carbon fibers impregnated with the resin were heated at from 80 to 180°C to obtain a pipe-shaped molded body.

The obtained molded body was a pipe-shaped molded body in which the volume fraction of the reinforcing fibers (carbon fibers) in the molded body was 0.40 or more, there was no discoloration of the resin, the appearance was good, and there was no void.

This indicates that the epoxy resin composition of the present invention is also suitable for filament winding molding and is therefore suitable for producing a container for storing high-pressure gas.

On the other hand, when the epoxy resin compositions of Comparative Example 7 and Comparative Example 8 were used, the viscosity increased and the control of the resin amount became difficult in 30 minutes from the coating, the curing started in 2 hours from the coating, and the coating could not be continued.

### <Production of pipe-shaped molded body (fiber-reinforced composite material containing glass fiber as reinforcing fiber) (filament winding molding)>

The epoxy resin compositions of Examples 3, 8, and 12 and glass fibers (available from Nitto Boseki Co., Ltd., ECG 75 1/0 0.7Z, fineness: 687 dtex, number of fibers: 400 f) were used for filament winding molding.

The epoxy resin composition was continuously coated for 12 hours to impregnate the glass fibers as the reinforcing fibers with the resin. Thereafter, the carbon fibers impregnated with the resin were heated at from 80 to 180°C to obtain a pipe-shaped molded body.

The obtained molded body was a pipe-shaped molded body in which the volume fraction of the reinforcing fibers (glass fibers) in the molded body was 0.40 or more, there was no discoloration of the resin, the appearance was good, and there was no void.

From the results of the above-described examples, the epoxy resin compositions of the examples have a low viscosity, particularly a viscosity at 60°C, and is less likely to cause scorching and discoloration even when molded by heating to 160°C, and the resulting cured product has a high hydrogen gas barrier property. Furthermore, it can be understood that the pot life and shelf life of the epoxy resin composition are sufficiently long. As described above, the epoxy resin composition of the present invention has a long pot life and a low viscosity, and thus is suitable for filament winding molding, resin transfer molding, and towpreg preparation. Further, the epoxy resin composition has a long shelf life, causes less scorching during molding, and can achieve a high hydrogen gas barrier property. Therefore, the epoxy resin composition of the present invention is particularly suitable for production of a container for storing high-pressure hydrogen gas.

## Claims

1. An epoxy resin composition, comprising an epoxy resin (A) and an epoxy resin curing agent (B),
the epoxy resin (A) comprising an epoxy resin (A1) and an epoxy resin (A2),
the epoxy resin (A1) being an epoxy resin having a glycidyl group derived from resorcinol, and
the epoxy resin (A2) being at least one selected from the group consisting of: an epoxy resin (a21) having a glycidyl group derived from bisphenol F; an epoxy resin (a22) having a glycidyl group derived from bisphenol A; an epoxy resin (a23) having a glycidyl group derived from novolak phenol; an epoxy resin (a24) having a glycidyl group derived from triphenylmethane type phenol; an epoxy resin (a25) having a glycidyl group derived from a polyol having a naphthalene skeleton; and an epoxy resin (a26) having an aminoglycidyl group, and
the epoxy resin curing agent (B) comprising at least one selected from the group consisting of: resorcinol (B1); and a pre-reaction product (B2) of resorcinol (B1), the epoxy resin (A), and a curing accelerator (C), the pre-reaction product (B2) being a reaction product obtained by reacting from 1 to 40 parts by mass of the epoxy resin (A) and from 0.01 to 5 parts by mass of the curing accelerator (C) with 100 parts by mass of the resorcinol (B1),
wherein the epoxy resin has from 7 to 60 mass% epoxy resin curing agent (B) content when a total amount of the epoxy resin (A) and the epoxy resin curing agent (B) in the epoxy resin composition is 100 mass%.

2. The epoxy resin composition according to claim 1, wherein
the epoxy resin curing agent (B) further comprises an epoxy resin curing agent (B3),
the epoxy resin curing agent (B3) comprising at least one selected from the group consisting of: a phenolic curing agent (b31) other than resorcinol (B1); and a dihydrazide curing agent (b32).

3. The epoxy resin composition according to claim 2, wherein the phenolic curing agent (b31) other than resorcinol (B1) is at least one selected from the group consisting of bisphenol F, bisphenol A, novolak phenol, and triphenylmethane type phenol.

4. The epoxy resin composition according to any one of claims 1 to 3, wherein [(A1)/(A2)], a mass ratio of the epoxy resin (A1) to the epoxy resin (A2) contained in the epoxy resin (A), is from 1/99 to 90/10.

5. The epoxy resin composition according to any one of claims 1 to 4, wherein [(A1)/(A2)], a mass ratio of the epoxy resin (A1) to the epoxy resin (A2) contained in the epoxy resin (A), is from 20/80 to 90/10.

6. The epoxy resin composition according to any one of claims 2 to 5, wherein [((B1) + (B2))/(B3)], a mass ratio of a total amount of the resorcinol (B1) and the pre-reaction product (B2) to the epoxy resin curing agent (B3) contained in the epoxy resin curing agent (B), is from 8/92 to 100/0.

7. The epoxy resin composition according to any one of claims 1 to 6, further comprising a curing accelerator (C),
the curing accelerator (C) comprising at least one selected from the group consisting of imidazoles, tertiary amines, and phosphorus compounds.

8. The epoxy resin composition according to any one of claims 1 to 7, further comprising a stress relaxation component (D).

9. The epoxy resin composition according to any one of claims 1 to 8, wherein a cured product of the epoxy resin composition has a hydrogen gas permeation coefficient at 23°C of 8.4 × 10⁻¹¹ [cc•cm/(cm²•s•cmHg)] or less.

10. A cured product of the epoxy resin composition according to any one of claims 1 to 9.

11. A prepreg comprising a reinforcing fiber impregnated with the epoxy resin composition according to any one of claims 1 to 9.

12. The prepreg according to claim 11, wherein the reinforcing fiber is at least one selected from the group consisting of a carbon fiber, a glass fiber, and a basalt fiber.

13. The prepreg according to claim 11 or 12, wherein the prepreg is a tow prepreg.

14. The prepreg according to claim 11 or 12, wherein the prepreg is a UD tape.

15. A fiber-reinforced composite material, which is a cured product of the prepreg according to any one of claims 11 to 14.

16. A high-pressure gas container comprising the fiber-reinforced composite material according to claim 15.
